# EUROPÄISCHE PATENTSCHRIFT

(11) **EP 1 176 065 B1**
(45) Veröffentlichungstag und Bekanntmachung des Hinweises auf die Patenterteilung: **14.07.2004**
(21) Anmeldenummer: 01117336.6
(22) Anmeldetag: 18.07.2001
(51) Int. Cl.: B60R 25/02, B60R 25/06

(54) **Verriegelungseinrichtung, insbesondere für ein Kraftfahrzeug**
Lock assembly, particularly for a motor vehicle
Mécanisme de verrouillage, notamment pour une vehicule à moteur

(30) Priorität: 19.07.2000 DE 10035459
(43) Veröffentlichungstag der Anmeldung: 30.01.2002
(73) Patentinhaber: Marquardt GmbH, 78604 Rietheim-Weilheim (DE)
(72) Erfinder: Stauss, Gerd, 72474 Winterlingen (DE); Schwarz, Thomas, 78573 Wurmlingen (DE); Müller, Karl, 78628 Rottweil-Neufa (DE)
(74) Vertreter: Patentanwälte Eisele, Otten, Roth & Dobler

(56) Entgegenhaltungen:
- DE-C- 3 739 172
- DE-C- 4 436 326

## Beschreibung

Die Erfindung betrifft eine Verriegelungseinrichtung nach dem Oberbegriff des Patentanspruchs 1.

Derartige Verriegelungseinrichtungen dienen als Lenkungsverriegelung zum Verriegeln der Lenksäule in einem Kraftfahrzeug, um den Diebstahlschutz zu erhöhen. Sie werden insbesondere bei Betätigung des Zündschlosses im Kraftfahrzeug ver- oder entriegelt.

In Kraftfahrzeugen kann anstelle eines mechanischen Zündschlosses ein elektronisches Zündschloß verwendet werden. Zur näheren Ausgestaltung eines elektronischen Zündschlosses wird auf die DE 44 34 587 A1 verwiesen. Das elektronische Zündschloß kann einen Lastschalter zum Schalten von Stromkreisen im Bordnetz des Kraftfahrzeugs aufweisen.

Bei einem elektronischen Zündschloß kann auch die Lenkungsverriegelung durch einen Elektromotor angetrieben werden. Der Elektromotor wird nur dann angesteuert, wenn die codierten Daten des elektronischen Schlüssels richtig sind. Es handelt sich bei einer derartigen Lenkungsverriegelung um eine sogenannte elektrische Lenkungsverriegelung.

Aus der DE 37 39 172 C1 ist eine solche elektrische Lenkungsverriegelung für ein Kraftfahrzeug bekannt, die einen zwischen einer ersten und einer zweiten Position bewegbaren Sperrbolzen zur Verriegelung der Lenkradsäule aufweist. Der Sperrbolzen ist in der ersten Position in blockierenden Eingriff mit der Lenkradsäule bringbar und steht in der zweiten Position außer Eingriff mit der Lenkradsäule. Die Lenkungsverriegelung besitzt einen Antrieb für die Bewegung des Sperrbolzens, wobei der Antrieb in Entriegelungsrichtung für die Bewegung des Sperrbolzens in Richtung zur zweiten Position sowie in Verriegelungsrichtung für die Bewegung des Sperrbolzens in Richtung zur ersten Position ansteuerbar ist.

DE 4 436 326 C1 beschreibt ein Schloss zum Verriegeln der Lenkspindel oder der Ausgungswelle des Antriebsgetriebes eines Kraftfahrzeugs wobei ein Sperrbolzen in und aus eine Verriegelungsstellung via ein Steuerglied der von einem Elektromotor angetrieben ist.

Solche elektrische Lenkungsverriegelungen erhöhen zwar die Diebstahlsicherheit, bringen jedoch andererseits folgendes Problem mit sich. Es muß während der Fahrt des Kraftfahrzeugs mit absoluter Sicherheit ausgeschlossen werden, daß der Elektromotor angesteuert wird und die Lenkradsäule verriegelt wird. Denn eine verriegelte Lenkung würde während der Fahrt mit großer Sicherheit zu einem Unfall führen und das Leben der Kraftfahrzeuginsassen wäre in Gefahr. Es sind jedoch Fehlermöglichkeiten oder Fehlfunktionen der Lenkungsverriegelung während der Fahrt denkbar, von denen nachfolgende Liste nur eine kleine Auswahl darstellen kann. Das Programm des Mikroprozessors, der die Ansteuerung des Antriebs des Elektromotors der Lenkungsverriegelung bewirkt, besitzt einen nicht entdeckten Fehler, welcher unter ganz bestimmten Umständen ein Verriegeln der Lenkradsäule verursacht. Durch elektromagnetische Störeinstrahlung kommt es zu einer Fehlfunktion der Elektronik der Lenkungsverriegelung. Wegen einer schadhaften Lötstelle löst sich, beispielsweise aufgrund der ständigen Erschütterungen des Kraftfahrzeugs, ein Bauteil der Elektronik der Lenkungsverriegelung. Elektrische Bauteile, beispielsweise der den Elektromotor ansteuernde Transistor, sind defekt.

Eine prinzipielle Möglichkeit, die elektrische Lenkungsverriegelung während der Fahrt zu sichern, kann dadurch realisiert werden, daß im elektronischen Zündschloß ein Schalter angeordnet wird, welcher die Spannungsversorgung der elektrischen Lenkungsverriegelung in Fahrtstellung des Zündschlosses mechanisch unterbricht. Jedoch bestehen Überlegungen für neuartige Bedienmöglichkeiten von Kraftfahrzeugen, die sogenannte "Keyless-Go-Funktionalität", bei denen der Start des Kraftfahrzeugmotors nicht mehr durch das Drehen am Zündschloß erfolgt. In solchen Fällen ist folglich eine mechanische Spannungsabschaltung der elektrischen Lenkungsverriegelung während der Fahrt des Kraftfahrzeugs nicht mehr möglich. Ebenso ist dann die Möglichkeit eingeschränkt, den Lastschalter im Zündschloß anzuordnen. Ein gegebenenfalls noch vorhandenes Zündschloß dient dann lediglich zur Notbetätigung bei einem etwaigen Ausfall der Keyless-Go-Funktionalität.

Eine weitere Möglichkeit, die Lenkungsverriegelung während der Fahrt zu sichern, ist aus der DE 197 04.062 bekannt. Bei der dort beschriebenen Lenkungsverriegelung wird der Sperrbolzen mittels eines Elektromagneten bewegt. Ein Sicherungselement, das ebenfalls mittels Elektromagneten betätigbar ist, ist während der Fahrt in blockierenden Eingriff mit dem Sperrelement bringbar. Nachteilig ist hier die aufwendige und großbauende Anordnung. Zudem sind auch Fehlerfälle für die Betätigung des Sicherungselementes denkbar, so daß wiederum Fehlfunktionen der Lenkungsverriegelung nicht mit Sicherheit ausgeschlossen werden können.

Der Erfindung liegt ausgehend von diesem Stand der Technik die Aufgabe zugrunde, die Verriegelungseinrichtung derart weiterzuentwickeln, daß deren Verriegelung bei Auftreten eines Fehlers wirksam verhindert ist. Insbesondere soll die Verriegelungseinrichtung für ein Fahrzeug mit Keyless-Go-Funktionalität einsetzbar sein.

Diese Aufgabe wird bei einer gattungsgemäßen Verriegelungseinrichtung durch die kennzeichnenden Merkmale des Anspruchs 1 gelöst.

Bei der erfindungsgemäßen Verriegelungseinrichtung ist sowohl der Sperrbolzen von der Antriebswelle des Antriebs bewegbar als auch zusätzlich ein Sicherungselement. Dieses Sicherungselement ist mit Hilfe der Antriebswelle derart in und außer Zusammenwirkung mit dem Sperrbolzen bewegbar, daß der Sperrbolzen in einen Sicherungszustand und einen Entsicherungszustand bringbar ist, wobei im Sicherungszustand der blockierende Eingriff des Sperrbolzens in die Lenkradsäule gesperrt sowie im Entsicherungszustand freigegeben ist. Dabei ist das Sicherungselement derart bewegbar, daß der Sperrbolzen in der zweiten Position im Sicherungszustand befindlich ist. In bevorzugter Weise bewegt hierfür die Antriebswelle den Sperrbolzen und das Sicherungselement zwangsgeführt. Bei der erfindungsgemäßen Verriegelungseinrichtung ist somit auf einfache Art und Weise die Sicherheit gesteigert. Weitere Ausgestaltungen der Erfindung sind Gegenstand der Unteransprüche.

Insbesondere besteht ein ergänzender Grundgedanke der Erfindung darin, daß ein in zweiter Position befindlicher Sperrbolzen durch Drehung des Antriebsmotors in eine Richtung die Lenkradsäule nicht verriegeln kann. Um den Sperrbolzen in blockierenden Eingriff mit der Lenkradsäule bringen zu können, ist eine Drehung des Antriebsmotors in mehr als eine Richtung notwendig. Während ein Fehlverhalten der Verriegelungseinrichtung bei der Entriegelung unkritisch ist, wird ein kritischer Fehllauf der Verriegelungseinrichtung bei der Verriegelung aufgrund der Bewegung des Antriebs nur in eine Richtung daher erkannt. Bei einem derartigen Fehlverhalten erfolgt nun keine Verriegelung, da zum Verriegeln der Verriegelungseinrichtung ein bestimmter Bewegungsablauf eingehalten werden muß. Da die Verriegelung nur dann möglich ist, wenn dieser Ablauf eingehalten wird, kann man mit sehr großer Sicherheit davon ausgehen, daß genau dieser Ablauf im Fehlerfall nicht vorkommen kann. Hierzu bleibt der Sperrbolzen bei Ansteuerung des Antriebs aus der zweiten Position in Verriegelungsrichtung zunächst im Sicherungszustand. Eine Zustandsänderung des Sperrbolzens in den Entsicherungzustand erfolgt nur dann, wenn der Antrieb anschließend wiederum in Entriegelungsrichtung angesteuert wird.

Es bietet sich an, die Antriebswelle in der Art eines Rotors auszubilden. Der Antrieb dreht den Rotor zweckmäßigerweise mittels eines Getriebes. Beispielsweise besteht das Getriebe aus Stirnzahnrädern, aus einer Schnecke, die auf eine am Außenumfang des Rotors angebrachte Verzahnung einwirkt, oder ist in sonstiger bekannter Weise ausgebildet.

In einer ersten Ausführung befindet sich ein Hohlraum in der Achse des Rotors. In diesem Hohlraum ist der Sperrbolzen derart angeordnet, daß der Sperrbolzen an dem einen Ende des Rotors übersteht. Die Hubkurve kann dann an dem anderen Ende und im Inneren des Rotors angebracht sein. In einer zweiten Ausführung hingegen ist die Hubkurve am Äußeren des Rotors, und zwar an dessen Mantelfläche angebracht. Der Sperrbolzen oder auch ein Halteteil für den Sperrbolzen ist dann seitlich am Äußeren des Rotors derart angeordnet, daß der Sperrbolzen bzw. das Halteteil der Hubkurve zugewandt ist.

Die Hubkurve kann einen schraubenartigen Abschnitt aufweisen. Ein Zapfen des Sperrbolzens und/oder dessen Halteteils greift derart in die Hubkurve ein, daß der Sperrbolzen mittels des schraubenartigen Abschnitts der Hubkurve zwischen den beiden Positionen bewegt wird. Die Hubkurve kann weiterhin einen der zweiten Position zugeordneten, plateauartigen Abschnitt besitzen, wobei der Eingriff des Zapfens in den plateauartigen Abschnitt ein Verbleiben des Sperrbolzens in der zweiten Position trotz Bewegung der Antriebswelle bewirkt. Zur zusätzlichen Erhöhung der Sicherheit kann ein zweiter Zapfen des Sperrbolzens und/oder dessen Halteteils in einen weiteren plateauartigen Abschnitt am Rotor in der zweiten Position eingreifen.

Bei dem Sicherungselement handelt es sich vor allem um ein mechanisches Sicherungselement. Am Sperrbolzen befindet sich eine zum Sicherungselement korrespondierende Nut. Das Sicherungselement greift im Sicherungszustand in die Nut ein sowie ist im Entsicherungszustand außer Eingriff mit der Nut. Zweckmäßigerweise ist hierzu das Sicherungselement mittels einer am Rotor angebrachten Steuerkurve bewegbar, wozu ein Führungselement in die Steuerkurve eingreift.

In der ersten Ausführung ist die Steuerkurve an dem einen, dem überstehenden Sperrbolzen zugewandten Ende und im Inneren des Rotors angebracht. Die Steuerkurve weist bevorzugterweise drei derart ausgestaltete Abschnitte auf, daß bei Bewegung der Antriebswelle aus der ersten Position in Entriegelungsrichtung das Sicherungselement in dem ersten und zweiten Abschnitt nicht bewegt sowie im dritten Abschnitt in Zusammenwirkung mit dem Sperrbolzen bewegt wird. Bei Bewegung der Antriebswelle aus der zweiten Position in Verriegelungsrichtung wird hingegen das Sicherungselement im dritten und ersten Abschnitt nicht bewegt sowie im zweiten Abschnitt lediglich bei Ansteuerung des Antriebs in Entriegelungsrichtung außer Zusammenwirkung mit dem Sperrbolzen bewegt. Bei korrektem Ablauf erfolgt dadurch eine Zustandsänderung in den Sicherungszustand oder in den Entsicherungszustand für den Sperrbolzen.

Weiter kann bei dieser Ausführung das Führungselement federbelastet in Verriegelungsrichtung umklappbar ausgestaltet sein, um beim Umklappen außer Eingriff und beim Rückklappen wieder in Eingriff mit der Steuerkurve zu gelangen. Die Steuerkurve weist im zweiten Abschnitt einen Steuernocken auf. Das Führungselement klappt dann bei Bewegung der Antriebswelle in Verriegelungsrichtung an der einen Seite des Steuernockens zur Passage des Steuernockens um. Das rückgeklappte Führungselement wird hingegen bei erneuter Bewegung der Antriebswelle in Entriegelungsrichtung an der anderen Seite des Steuernockens derart entlang geführt, daß das Sicherungselement außer Zusammenwirkung mit dem Sperrbolzen bewegt wird. In weiterer Ausgestaltung weist der Rotor hierfür an dem einen, dem überstehenden Sperrbolzen zugewandten Ende einen entlang des Umfangs verlaufenden Außenrand und einen den Hohlraum umgebenden Innenrand auf. Der erste Abschnitt der Steuerkurve kann als eine konzentrisch, entlang des Außenrandes des Rotors verlaufende Nut ausgestaltet sein, die in etwa eine dem Führungselement entsprechende Breite besitzt. Der zweite Abschnitt der Steuerkurve ist als eine Nut mit einer vom Innenrand zum Außenrand reichenden Breite ausgestaltet, wobei der Steuernocken in etwa in deren Mitte vom Innenrand abgeht sowie zum Außenrand weist und einen Durchgang zum Außenrand für das Führungselement freiläßt. Der dritte Abschnitt der Steuerkurve ist als eine schräg vom Außenrand zum Innenrand verlaufende Nut ausgestaltet, die in etwa mit einer dem Führungselement entsprechenden Breite ausläuft.

In der zweiten Ausführung ist die Steuerkurve an dem einen, dem Sperrbolzen zugewandten Ende und an der einen Grundfläche des Rotors angebracht. Die Steuerkurve weist drei Abschnitte auf, die insbesondere insgesamt in etwa schneckenförmig ausgestaltet sind. Bei Bewegung der Antriebswelle aus der ersten Position in Entriegelungsrichtung wird das Sicherungselement in dem ersten Abschnitt nicht bewegt, im zweiten Abschnitt wird das Sicherungselement in Zusammenwirkung mit dem Sperrbolzen bewegt sowie im dritten Abschnitt wird das Sicherungselement wiederum nicht bewegt. Bei Bewegung der Antriebswelle aus der zweiten Position in Verriegelungsrichtung wird ebenso das Sicherungselement im dritten und ersten Abschnitt nicht bewegt sowie im zweiten Abschnitt wird das Sicherungselement außer Zusammenwirkung mit dem Sperrbolzen bewegt. Dadurch erfolgt bei korrektem Ablauf eine Zustandsänderung in den Sicherungszustand oder in den Entsicherungszustand für den Sperrbolzen. Weiter kann bei dieser Ausführung die Steuerkurve als Nut in der Grundfläche des Rotors ausgestaltet sein. Das Führungselement ist starr am Sicherungselement derart angebracht, daß das Führungselement in die Nut eingreift.

Zweckmäßigerweise ist für die Verriegelungsvorrichtung ein Gehäuse zur Aufnahme des Antriebs, der Antriebswelle u. dgl. vorgesehen. Im Gehäuse kann ein Lagersitz zur drehbaren Lagerung des Rotors angeordnet sein. Im Lagersitz kann sich ein zum Äußeren des Gehäuses reichender Durchbruch für den Sperrbolzen befinden. Weiter kann eine in etwa quer zum Sperrbolzen verlaufende Führung für das bewegbare Sicherungselement am Lagersitz befindlich sein.

In weiterer Ausgestaltung ist das Sicherungselement als Schieber ausgebildet. Der Schieber kann mittels eines Rasthakens in der als Schiebeführung ausgestalteten Führung angeordnet sein. Das umklappbare Führungselement entsprechend der ersten Ausführung kann in etwa bolzenartig abstehend, über eine Feder drehbar am Schieber gelagert sein. Das Führungselement ist dann zur einen Seite gegen die Kraft der Feder in eine Ausnehmung am Schieber auslenkbar. Zur anderen Seite steht das Führungselement durch die Kraft der Feder in Anlage an einem einseitigen Anschlag am Schieber. Im Sicherungszustand des Schiebers korrespondiert die Ausnehmung am Schieber mit einer weiteren Ausnehmung in der Führung, derart daß das ausgelenkte Führungselement in den beiden Ausnehmungen aufgenommen ist.

Bevorzugterweise betätigt das Sicherungselement im Sicherungszustand ein Schaltelement zur Detektierung der Position des Sperrbolzens. Bei dem Schaltelement kann es sich um einen Schnapp- bzw. Mikroschalter handeln. Somit kennzeichnet der betätigte Schalter den korrekt in zweiter Position und im Sicherungszustand befindlichen Sperrbolzen. Das starre Führungselement entsprechend der zweiten Ausführung kann eine Sollbruchstelle zum Sicherungselement aufweisen, wodurch im Fehlerfall ein Abscheren des Führungselementes unter Nichtbetätigung des Schaltelementes bewirkt wird. Im Fehlerfalle ist somit die Betätigung des Schalters ausgeschlossen, so daß dann entsprechende Maßnahmen eingeleitet werden können.

Die mit der Erfindung erzielten Vorteile bestehen insbesondere darin, daß eine verbesserte Funktionssicherheit der Verriegelungseinrichtung erzielt wird. Eine Gefährdung der Fahrzeuginsassen aufgrund eines unkontrollierten Verriegelns der Verriegelungseinrichtung bei Fehlfunktionen ist mit hoher Sicherheit ausgeschlossen. Außerdem besitzt die erfindungsgemäße Verriegelungseinrichtung vergleichsweise wenige Bauteile, so daß eine besondere Kostengünstigkeit trotz gesteigerter Sicherheit resultiert. Insbesondere ist kein zusätzlicher Aktor für die Bewegung des Sicherungselements notwendig, da dieselbe Antriebseinheit sowohl für die Bewegung des Sperrbolzens als auch für diejenige des Sicherungselements dient. Außerdem ist die Verriegelungseinrichtung kleinbauend und benötigt lediglich einen geringen Einbauraum im Kraftfahrzeug.

Weiterhin ist die erfindungsgemäße Verriegelungseinrichtung für Kraftfahrzeuge mit Keyless-Go-Funktionalität geeignet und gewährleistet auch bei derartigen Kraftfahrzeugen die gewünschte Sicherheit. Eine solche Verriegelungseinrichtung steigert dadurch auch den Bedienkomfort für den Benutzer des Kraftfahrzeugs. Im übrigen ist eine Elektronik mit gegebenenfalls einem Prozessor für die Wegfahrsperre zur Decodierung des übermittelten Codes in der elektrischen Lenkungsverriegelung bereits enthalten, so daß diese Elektronik nunmehr kostengünstig für die Keyless-Go-Funktionalität mitgenutzt werden kann.

Ausführungsbeispiele der Erfindung mit verschiedenen Weiterbildungen und mit weiteren Ausgestaltungen sind in den Zeichnungen dargestellt und werden im folgenden näher beschrieben. Es zeigen
- Fig. 1: eine Draufsicht auf die in einem geöffnet dargestellten Gehäuse befindliche Verriegelungseinrichtung in einer ersten Ausführung,
- Fig. 2: einen Schnitt entlang der Linie 2-2 in Fig. 1,
- Fig. 3: einen Schnitt entlang der Linie 3-3 in Fig. 1,
- Fig. 4: einen Schnitt entlang der Linie 4-4 in Fig. 1,
- Fig. 5: einen Schnitt entlang der Linie 5-5 in Fig. 1,
- Fig. 6: die Antriebswelle als Einzelteil in Seitenansicht,
- Fig. 7: eine Draufsicht auf die Antriebswelle entsprechend der Richtung gemäß Pfeil VII aus Fig. 6,
- Fig. 8: eine Draufsicht auf das Sicherungselement als Einzelteil,
- Fig. 9: einen Schnitt entlang der Linie 9-9 aus Fig. 8,
- Fig. 10: eine perspektivische Ansicht einer Verriegelungseinrichtung in einer zweiten Ausführung, wobei der Sperrbolzen in der ersten Position befindlich ist,
- Fig. 11: eine perspektivische Ansicht der Verriegelungseinrichtung, wobei der Sperrbolzen in der zweiten Position befindlich ist,
- Fig. 12: eine zu Fig. 11 in etwa orthogonale Ansicht der Verriegelungseinrichtung, wobei der Sperrbolzen in der zweiten Position befindlich ist,
- Fig. 13: eine den gesamten Antrieb der Verriegelungseinrichtung zeigende Ansicht,
- Fig. 14: eine weitere Ansicht, in der der Sperrbolzen in der ersten Position befindlich ist,
- Fig. 15: eine weitere Ansicht, in der der Sperrbolzen in der zweiten Position befindlich ist,
- Fig. 16: eine Ansicht wie in Fig. 15, jedoch aus einer weiteren Blickrichtung,
- Fig. 17: den Antrieb der Verriegelungseinrichtung in Richtung XVII gemäß Fig. 13 gesehen,
- Fig. 18: den Antrieb der Verriegelungseinrichtung in Richtung XVIII gemäß Fig. 13 gesehen und
- Fig. 19: schematisch den prinzipiellen Ablauf bei Bewegung des Sperrbolzens zwischen den beiden Positionen.

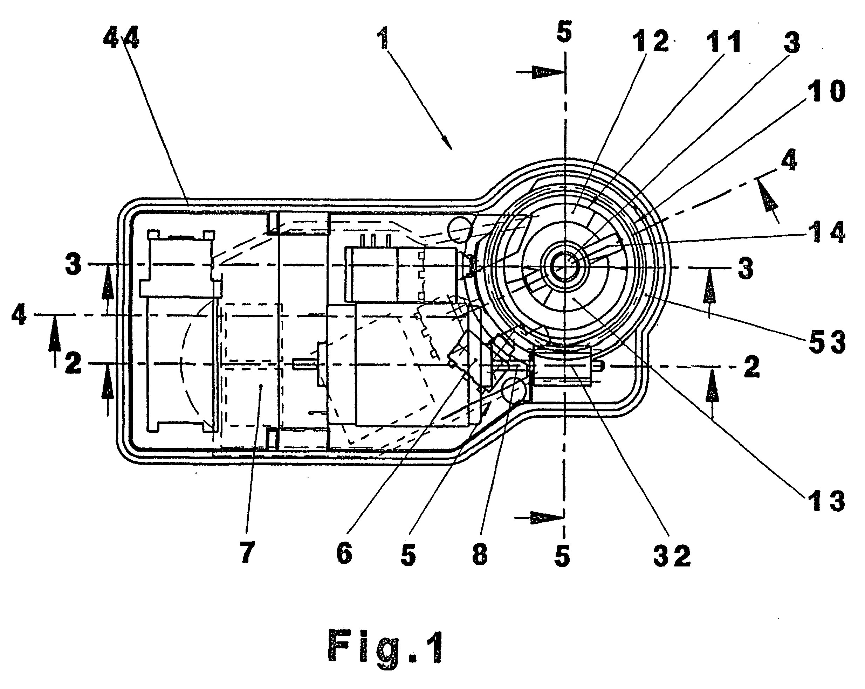

In Fig. 1 ist eine Verriegelungseinrichtung 1 für ein Kraftfahrzeug in einer ersten Ausführungsform gezeigt, die mit einem von der Oberseite geöffnet dargestellten Gehäuse 44 versehen ist. Die Verriegelungseinrichtung 1 dient zur Verriegelung der Lenkradsäule des Kraftfahrzeugs. Anstelle der Lenkradsäule kann die Verriegelungseinrichtung 1 selbstverständlich auch zur Verriegelung eines sonstigen funktionsrelevanten Bauteils des Kraftfahrzeugs dienen. Im nachfolgenden wird die Verriegelungseinrichtung 1 der Einfachheit halber am Beispiel einer elektrischen Lenkungsverriegelung näher beschrieben.

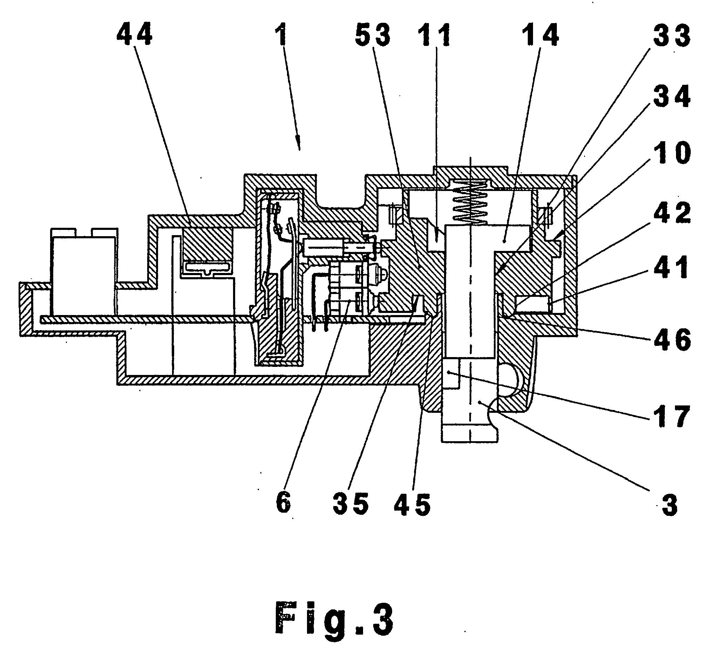

Die Verriegelungseinrichtung 1 besitzt einen beispielsweise in Fig. 3 sichtbaren Sperrbolzen 3, der zwischen einer ersten und einer zweiten Position bewegbar ist. In der ersten Position ist der Sperrbolzen 3 in blockierenden Eingriff mit der nicht weiter gezeigten Lenkradsäule bringbar. Bei entsprechender Stellung der Lenkradsäule kann der in der ersten Position befindliche Sperrbolzen 3 dann in eine Aussparung der Lenkradsäule eingreifen, so daß die Lenkradsäule dementsprechend blockiert und die Lenkungsverriegelung somit verriegelt ist. In der zweiten Position steht der Sperrbolzen 3 außer Eingriff mit der Lenkradsäule, so daß die Lenkradsäule freigegeben und folglich die Lenkungsverriegelung entriegelt ist.

Zur Bewegung des Sperrbolzens 3 weist die Verriegelungseinrichtung 1 einen Antrieb 5 auf. Wie anhand der Fig. 1 zu erkennen ist, umfaßt der Antrieb 5 einen Elektromotor 7 und eine Antriebswelle 10, wobei der Sperrbolzen 3 mittels einer Hubkurve 11 an der Antriebswelle 10 bewegbar ist. Der Antrieb 5 ist in Entriegelungsrichtung für die Bewegung des Sperrbolzens 3 in Richtung zur zweiten Position sowie in Verriegelungsrichtung für die Bewegung des Sperrbolzens 3 in Richtung zur ersten Position ansteuerbar.

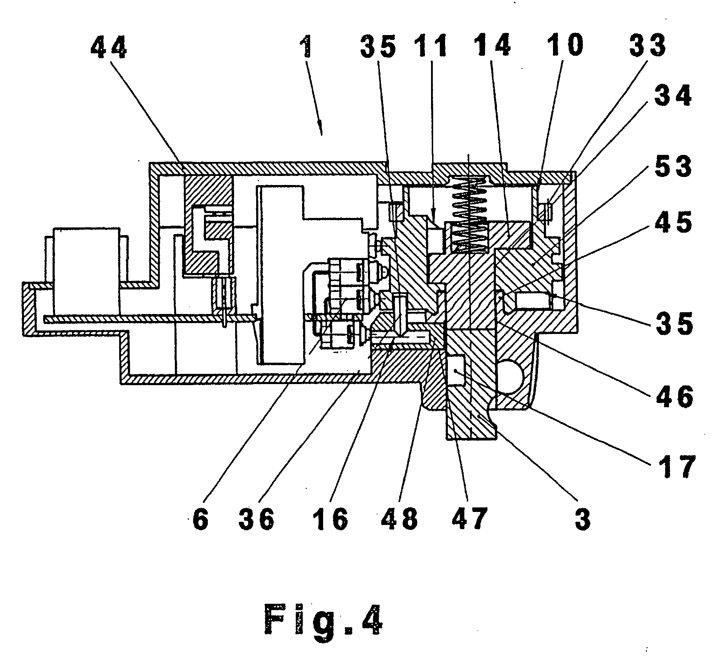

Aus Sicherheitsgründen ist während des Fahrbetriebs des Kraftfahrzeugs zu gewährleisten, daß der Sperrbolzen 3 nicht aufgrund einer Fehlfunktion in blockierenden Eingriff mit der Lenkradsäule gelangen kann. Hierzu ist ein in Fig. 4 sichtbares Sicherungselement 16 derart in und außer Zusammenwirkung mit dem Sperrbolzen 3 bewegbar, daß der Sperrbolzen 3 in einen Sicherungszustand und einen Entsicherungszustand bringbar ist. Im Sicherungszustand ist der blockierende Eingriff des Sperrbolzens 3 in die Lenkradsäule gesperrt. Im Entsicherungszustand ist hingegen der blockierende Eingriff des Sperrbolzens 3 in die Lenkradsäule freigegeben. Das Sicherungselement 16 wird von der Antriebswelle 10 derart bewegt, daß der Sperrbolzen 3 sich in der zweiten Position im Sicherungszustand befindet. Hervorzuheben ist somit, daß die Verriegelungseinrichtung 1 lediglich eine einzige Antriebswelle 10 aufweist, wobei sowohl der Sperrbolzen 3 als auch das Sicherungselement 16 unmittelbar von der Antriebswelle 10 bewegt werden. Die Verriegelungseinrichtung 1 ist somit besonders kompakt gebaut und vorteilhaft bei beengten Platzverhältnissen im Kraftfahrzeug einzusetzen.

In weiterer Ausgestaltung wird der Sperrbolzen 3 und das Sicherungselement 16 von der gemeinsamen Antriebswelle 10 zwangsgeführt bewegt. In der ersten Ausführungsform der Verriegelungseinrichtung 1 bleibt der Sperrbolzen 3 bei Ansteuerung des Antriebs 5 aus der zweiten Position in Verriegelungsrichtung zunächst im Sicherungszustand. Eine Zustandsänderung des Sperrbolzens 3 in den Entsicherungzustand erfolgt nur dann, wenn der Antrieb 5 anschließend wiederum in Entriegelungsrichtung angesteuert wird. Eine Ansteuerung des Antriebs 5 lediglich in Verriegelungsrichtung führt somit noch nicht zur Verriegelung der Verriegelungseinrichtung 1. Vielmehr ist ein bestimmter Ablauf, nämlich eine zusätzliche Ansteuerung in Entriegelungsrichtung, einzuhalten. Da die Verriegelung der Verriegelungseinrichtung 1 nur dann möglich ist, wenn genau dieser Ablauf eingehalten wird, kann man mit sehr großer Sicherheit davon ausgehen, daß ein solcher Ablauf im Fehlerfall gerade nicht vorkommen wird. Die Nichtverriegelung der Verriegelungseinrichtung 1 im Fehlerfall ist somit mit hoher Sicherheit gewährleistet.

Nachfolgend sollen verschiedene Weiterbildungen einer solchen Verriegelungseinrichtung 1 mit einer gemeinsamen Antriebswelle für den Sperrbolzen 3 und das Sicherungselement 16 näher beschrieben werden.

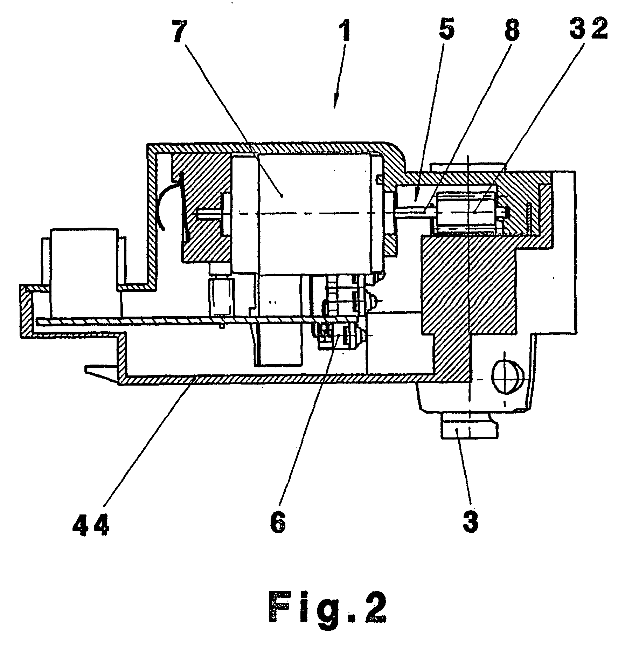

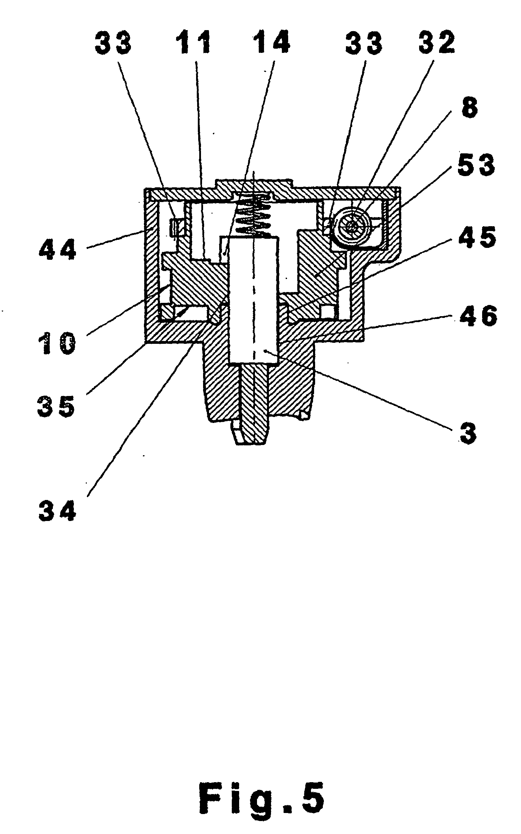

Die nähere Ausgestaltung des Antriebs 5 ist besonders deutlich in Fig. 2 und 5 zu sehen. Die Antriebswelle 10 ist in der Art eines Rotors 53 ausgebildet. Es bietet sich an, daß an der Abtriebswelle 8 des Elektromotors 7 vom Antrieb 5 eine Schnecke 32 angeordnet ist, die wiederum den Rotor 53 über eine am Außenumfang des Rotors 53 angebrachte Verzahnung 33 dreht. In der Achse des Rotors 53 ist ein Hohlraum 34 befindlich, wobei im Hohlraum 34 der Sperrbolzen 3 derart angeordnet ist, daß der Sperrbolzen 3 an dem einen Ende des Rotors 53 übersteht. Zweckmäßigerweise ist die Hubkurve 11 an dem anderen Ende und im Inneren des Rotors 53 angebracht. Die Hubkurve 11 weist einen schraubenartigen Abschnitt 12 auf, wie anhand von Fig. 1 zu sehen ist. Ein Zapfen 14 des Sperrbolzens 3 greift derart in die Hubkurve 11 ein, daß der Sperrbolzen 3 mittels des schraubenartigen Abschnitts 12 der Hubkurve 11 zwischen den beiden Positionen bewegt wird. Weiter besitzt die Hubkurve 11 einen der zweiten Position zugeordneten, plateauartigen Abschnitt 13, wobei der Eingriff des Zapfens 14 in den plateauartigen Abschnitt 13 ein Verbleiben des Sperrbolzens 3 in der zweiten Position trotz weiterer Bewegung der Antriebswelle 10 bewirkt. Die jeweilige Stellung des Rotors 53 wird durch elektrische Endschalter 6 signalisiert.

Bei dem Sicherungselement 16 handelt es sich um ein mechanisches Sicherungselement. Am Sperrbolzen 3 ist eine zum Sicherungselement 16 korrespondierende, in Fig. 4 gezeigte Nut 17 befindlich. Das Sicherungselement 16 greift im Sicherungszustand in die Nut 17 ein. Im Entsicherungszustand hingegen ist das Sicherungselement 16 außer Eingriff mit der Nut 17.

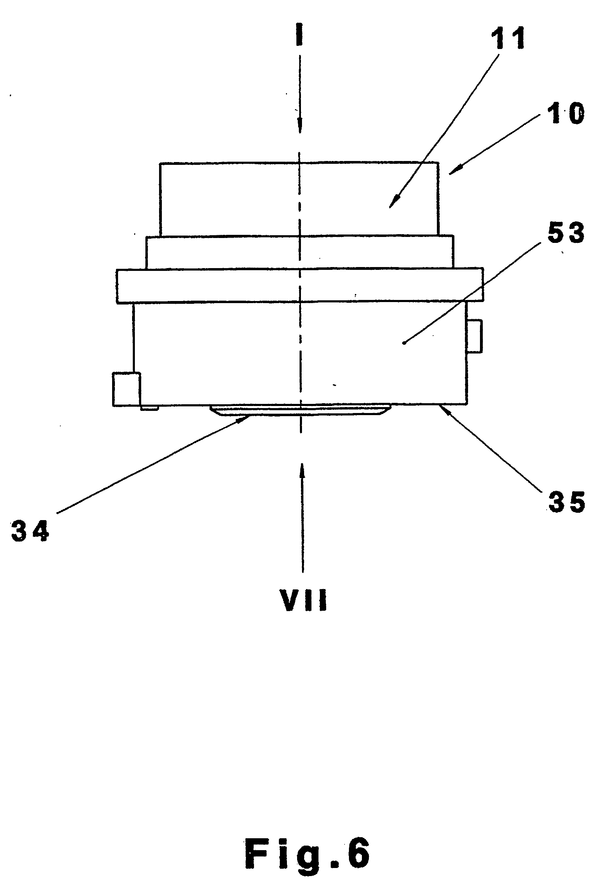

Wie näher der Fig. 4 zu entnehmen ist, ist das Sicherungselement 16 mittels einer Steuerkurve 35 bewegbar, wozu ein Führungselement 36 in die Steuerkurve 35 eingreift. Es bietet sich an, die Steuerkurve 35 an dem einen, dem überstehenden Sperrbolzen 3 zugewandten Ende und im Inneren des Rotors 53 anzubringen. Dies ist auch anhand von Fig. 6 verdeutlicht, wo der Rotor 53 der Antriebswelle 10 als Einzelteil in Seitenansicht gezeigt ist. Die Steuerkurve 35 ist dort gemäß dem Pfeil VII an dem einen Ende im Rotor 53 angeordnet. Hingegen ist die Hubkurve 11 im Inneren des Rotors 53 am anderen Ende entsprechend dem Pfeil I angeordnet, was bereits anhand der Fig. 1 weiter oben beschrieben ist.

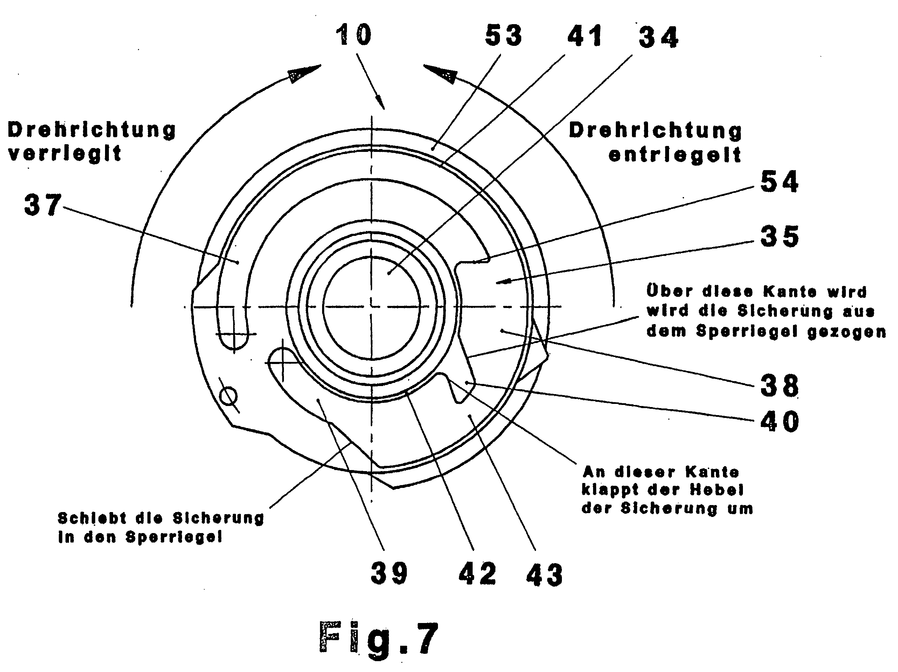

Wie weiter in Fig. 7 zu sehen ist, weist die Steuerkurve 35 drei derart ausgestaltete Abschnitte 37, 38, 39 auf, daß nachfolgender Bewegungsablauf für das Sicherungselement 16 resultiert. Bei Bewegung der Antriebswelle 10 aus der ersten Position in Entriegelungsrichtung wird das Sicherungselement 16 im ersten Abschnitt 37 und im zweiten Abschnitt 38 nicht bewegt sowie im dritten Abschnitt 39 in Zusammenwirkung mit dem Sperrbolzen 3 bewegt. Bei Bewegung der Antriebswelle 10 aus der zweiten Position in Verriegelungsrichtung wird das Sicherungselement 16 im dritten Abschnitt 39 und im ersten Abschnitt 37 nicht bewegt sowie im zweiten Abschnitt 38 lediglich bei erneuter Ansteuerung des Antriebs 5 in Entriegelungsrichtung außer Zusammenwirkung mit dem Sperrbolzen 3 bewegt. Bei dieser Bewegung erfolgt dann eine Zustandsänderung in den Sicherungszustand oder in den Entsicherungszustand für den Sperrbolzen 3.

Die nähere Ausgestaltung der Steuerkurve 35 ist ebenfalls in Fig. 7 zu sehen. Der Rotor 53 weist an dem einen, dem überstehenden Sperrbolzen 3 zugewandten Ende einen entlang des Umfangs verlaufenden Außenrand 41 und einen den Hohlraum 34 umgebenden Innenrand 42 auf. Der erste Abschnitt 37 der Steuerkurve 35 ist als eine konzentrisch, entlang des Außenrandes 41 des Rotors 53 verlaufende Nut ausgestaltet, die in etwa eine dem in Fig. 4 sichtbaren Führungselement 36 entsprechende Breite besitzt. Der zweite Abschnitt 38 der Steuerkurve 35 ist als eine Nut mit einer vom Innenrand 42 zum Außenrand 41 reichenden Breite ausgestaltet. Ein Steuernocken 40, dessen Funktion nachfolgend noch näher erläutert ist, geht in etwa in der Mitte dieser Nut vom Innenrand 42 ab sowie weist zum Außenrand 41 und läßt einen Durchgang 43 zum Außenrand 41 für das Führungselement 36 frei. Der dritte Abschnitt 39 der Steuerkurve 35 ist schließlich als eine schräg vom Außenrand 41 zum Innenrand 42 verlaufende Nut ausgestaltet, die in etwa mit einer dem Führungselement 36 entsprechende Breite ausläuft.

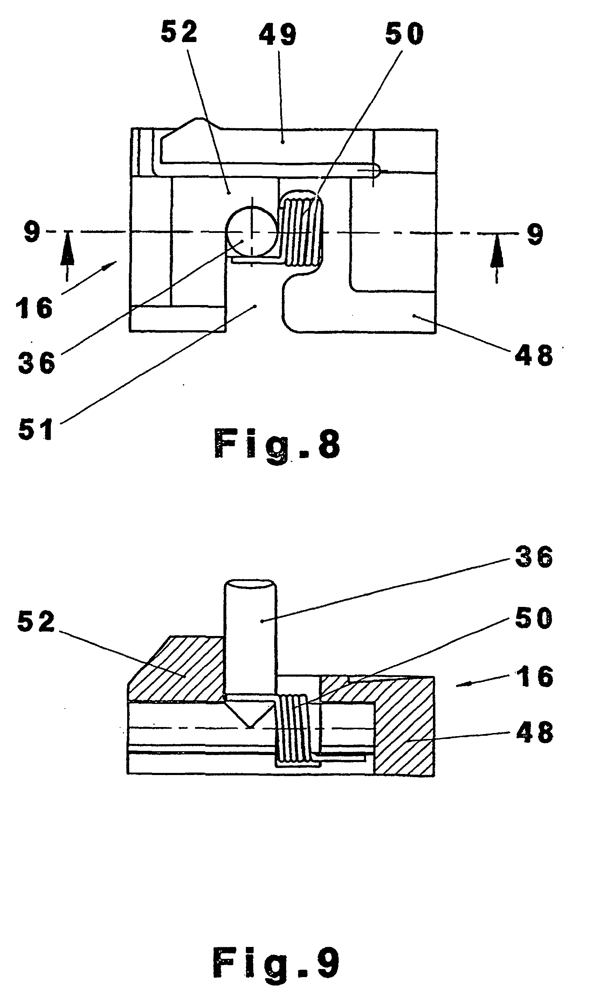

Das Führungselement 36 ist belastet durch eine in Fig. 8 sichtbare Feder 50 in Verriegelungsrichtung umklappbar ausgestaltet. Entsprechend Fig. 4 gelangt das Führungselement 36 beim Umklappen außer Eingriff und beim Rückklappen wieder in Eingriff mit der Steuerkurve 35. Die Steuerkurve 35 weist, wie bereits erwähnt, im zweiten Abschnitt 38 einen Steuernocken 40 auf. Das Führungselement 36 klappt nun bei Bewegung der Antriebswelle 10 in Verriegelungsrichtung ausgehend vom dritten Abschnitt 39 an der einen Seite, und zwar an der in Fig. 7 links liegenden Seite des Steuernockens 40 um. Dadurch ist das Führungselement 36 außer Eingriff mit der Steuerkurve 35, womit das Führungselement 36 am Steuernocken 40 vorbeibewegt werden kann. Nach Passage des Steuernockens 40 klappt das Führungselement 36 aufgrund der Kraft der Feder 50 wieder zurück und greift dann im zweiten Abschnitt 38 in die Steuerkurve 35 ein. Im Fehlerfall bei weiterer Bewegung in Verriegelungsrichtung kann das Führungselement 36 nunmehr nicht in den ersten Abschnitt 37 der Steuerkurve 35 gelangen, wie anhand der Fig. 7 verdeutlicht ist, vielmehr klappt das Führungselement 36 am Vorsprung 54 beim Übergang zwischen dem zweiten und ersten Abschnitt 38, 37 erneut um. Dadurch bleibt jedoch das Sicherungselement 16 im Eingriff mit der in Fig. 4 sichtbaren Nut 17 und der Sperrbolzen 3 letztendlich im Sicherungszustand. Bei fehlerfreiem Ablauf hingegen wird die Antriebswelle 10 erneut in Entriegelungsrichtung bewegt. Das rückgeklappte und im zweiten Abschnitt 38 befindliche Führungselement 36 wird dann an der anderen Seite, und zwar an der in Fig. 7 rechts liegenden Seite des Steuernockens 40 derart entlang geführt, daß das Sicherungselement 16 außer Zusammenwirkung mit dem Sperrbolzen 3 bewegt wird, womit der Sperrbolzen 3 letztendlich in den Entsicherungszustand gelangt. Gleichzeitig wird das Führungselement 36 am Steuernocken 40 zum Durchgang 43 und zum Außenrand 41 bewegt, womit das Führungselement 36 bei nachfolgender Bewegung in Verriegelungsrichtung dann wieder ordnungsgemäß vom zweiten Abschnitt 38 in den ersten Abschnitt 37 gelangen kann.

Wie bereits erwähnt, ist bei der Verriegelungseinrichtung 1 ein Gehäuse 44 vorgesehen, das zur Aufnahme des Antriebs 5, des Elektromotors 7, der Antriebswelle 10 u. dgl. dient. Im Gehäuse 44 ist, wie in Fig. 5 zu sehen ist, ein Lagersitz 45 zur drehbaren Lagerung des Rotors 53 angeordnet. Weiter befindet sich im Lagersitz 45 ein zum Äußeren des Gehäuses 44 reichender Durchbruch 46 für den Sperrbolzen 3. Eine in etwa quer zum Sperrbolzen 3 verlaufende Führung 47 für das bewegbare Sicherungselement 16 ist schließlich im Bereich des Lagersitzes 45 im Gehäuse 44 befindlich, wie anhand von Fig. 4 hervorgeht.

Bevorzugterweise ist das Sicherungselement 16 als Schieber 48 ausgebildet, der als Einzelteil in Fig. 8 und 9 näher zu sehen ist. Der Schieber 48 ist mittels eines Rasthakens 49 in der als Schiebeführung ausgestalteten Führung 47 angeordnet. Das in etwa bolzenartig abstehende Führungselement 36 ist über eine Feder 50 drehbar am Schieber 48 gelagert. Dadurch ist das Führungselement 36 zur einen Seite gegen die Kraft der Feder 50 in eine Ausnehmung 51 am Schieber 48 auslenkbar und steht zur anderen Seite durch die Kraft der Feder 50 in Anlage an einem einseitigen Anschlag 52 am Schieber 48. Im Sicherungszustand des Schiebers 48, und zwar wobei der Schieber 48 in die Nut 17 eingreift, korrespondiert die Ausnehmung 51 am Schieber 48 mit einer nicht näher gezeigten, weiteren Ausnehmung in der Führung 47, derart daß das ausgelenkte Führungselement 36 in den beiden Ausnehmungen 51 aufgenommen ist. Dadurch läßt sich, wie beschrieben, das Führungselement 36 an der einen Seite des Steuernockens 40 umklappen, während es nach dem Rückklappen aufgrund der Anlage am Anschlag 52 an der anderen Seite des Steuernockens 40 entlanggeführt wird.

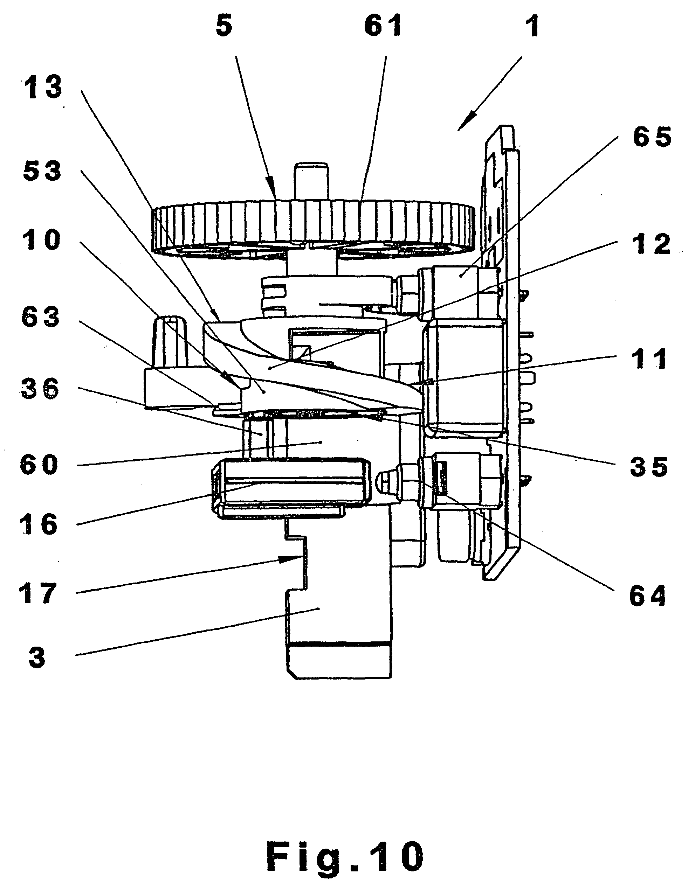

Eine Verriegelungseinrichtung 1 in weiterer zweiter Ausführung ist in Fig. 10 bis 18 näher zu sehen. Im Gegensatz zu der ersten Ausführung ist bei Ansteuerung des Antriebs 5 in Verriegelungsrichtung hier keine zusätzliche Ansteuerung in Entriegelungsrichtung notwendig. Dennoch realisiert auch diese Verriegelungseinrichtung 1 erhöhte Sicherheitsanforderungen. Der Einfachheit halber sind funktionsgleiche oder funktionsähnliche Elemente hier mit denselben Bezugszeichen wie in den Figuren zum ersten Ausführungsbeispiel bezeichnet.

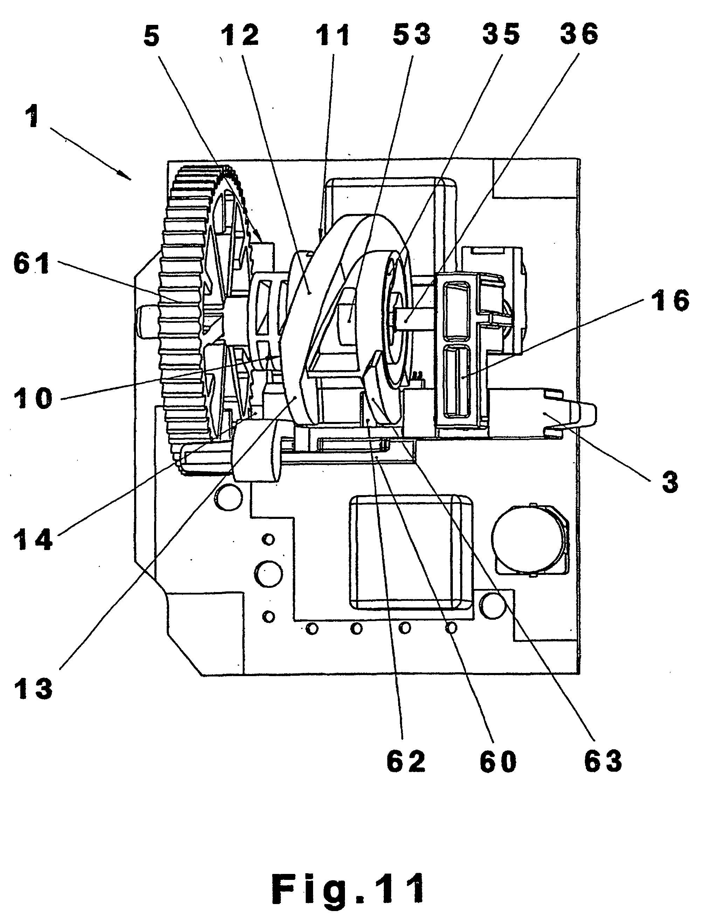

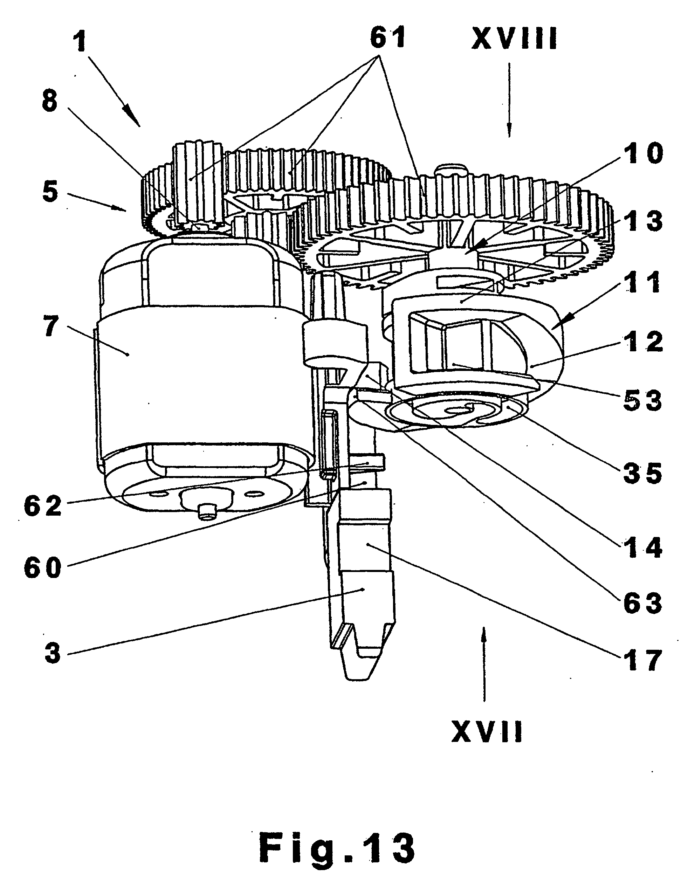

Die Verriegelungseinrichtung 1 besitzt, wie in Fig. 10 oder 11 gezeigt ist, wiederum einen Sperrbolzen 3, der hier an einem zusätzlichen Halteteil 60 befestigt ist, ein Sicherungselement 16 sowie einen gemeinsamen Antrieb 5 für die Zwangsführung des Sperrbolzens 3 und des Sicherungselementes 16. Der Antrieb 5 umfaßt eine in der Art eines zylinderförmigen Rotors 53 ausgestaltete Antriebswelle 10 sowie ein aus in Fig. 13 gezeigten Stirnzahnrädern 61 bestehendes Getriebe. Selbstverständlich kann das Getriebe auch in sonstiger bekannter Weise ausgestaltet sein. Allerdings ist hier unterschiedlich, daß die Hubkurve 11 am Äußeren des Rotors 53, und zwar an dessen Mantelfläche angebracht ist. Das Halteteil 60 des Sperrbolzens 3 ist seitlich am Äußeren des Rotors 53 derart angeordnet, daß das Halteteil 60 der Hubkurve 11 zugewandt ist, wie anhand der Fig. 11 zu erkennen ist.

Wie weiter in Fig. 11 zu sehen ist, greift ein Zapfen 14 am Halteteil 60 in die Hubkurve 11 ein. Die Hubkurve 11 besitzt einen schraubenartigen Abschnitt 12 sowie einen plateauartigen Abschnitt 13, so daß der Sperrbolzen 3 über das Halteteil 60 zwischen den beiden in Fig. 10 und 11 gezeigten Positionen bewegbar ist. Zusätzlich ist am Halteteil 60 ein zweiter Zapfen 62 befestigt, der in der zweiten Position des Sperrbolzens 3 in einen weiteren plateauartigen Abschnitt 63 am Rotor 53 eingreift. Dadurch wird eine weitere Sicherung des Sperrbolzens 3 in der zweiten Position erreicht, die beispielsweise bei Materialversagen o. dgl. des ersten Zapfens 14 wirksam wird. Falls auf das Halteteil 60 verzichtet wird oder dieses anders ausgestaltet ist, kann selbstverständlich der zweite Zapfen 62 auch direkt am Sperrbolzen 3 befindlich sein.

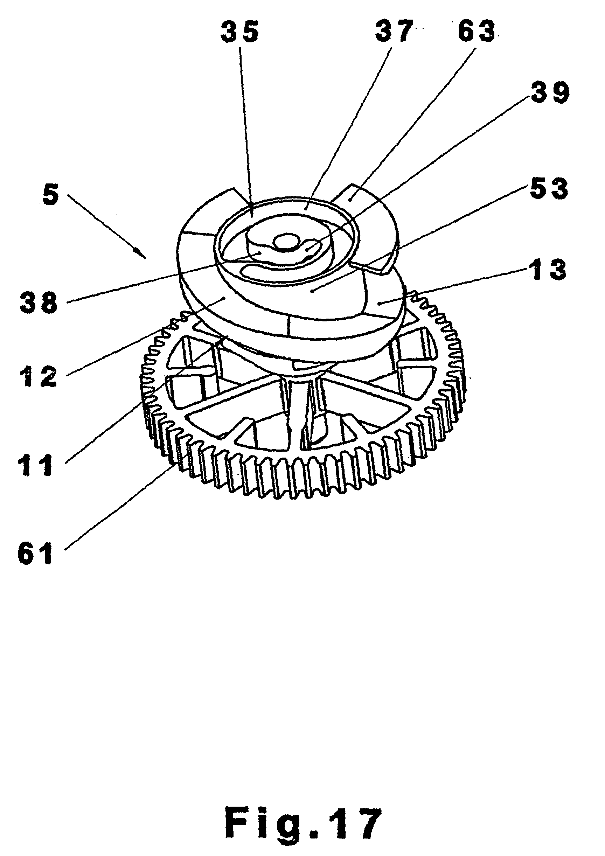

Der Sperrbolzen 3 ist während des Fahrbetriebs für das Kraftfahrezeugs zusätzlich durch das Sicherungselement 16 formschlüssig gesichert. Normalerweise berührt dabei jedoch das in die Nut 17 hineinragende Sicherungselement 16 aufgrund eines vorgesehenen Spiels den Sperrbolzen 3 nicht. Lediglich bei Versagen des Halteteils 60 würde dann das Sicherungselement 16 entsprechend greifen. Die Steuerkurve 35, in die das Führungselement 36 am Sicherungselement 16 zu dessen Bewegung eingreift, ist an dem einen, dem Sperrbolzen 3 zugewandten Ende des in etwa zylinderförmigen Rotors 53, und zwar an dessen einen Grundfläche angebracht. Wie näher in Fig. 17 zu sehen ist, weist die Steuerkurve 35 drei Abschnitte 37, 38, 39 auf. Bevorzugterweise sind diese Abschnitte 37, 38, 39 insgesamt in etwa schneckenförmig ausgestaltet.

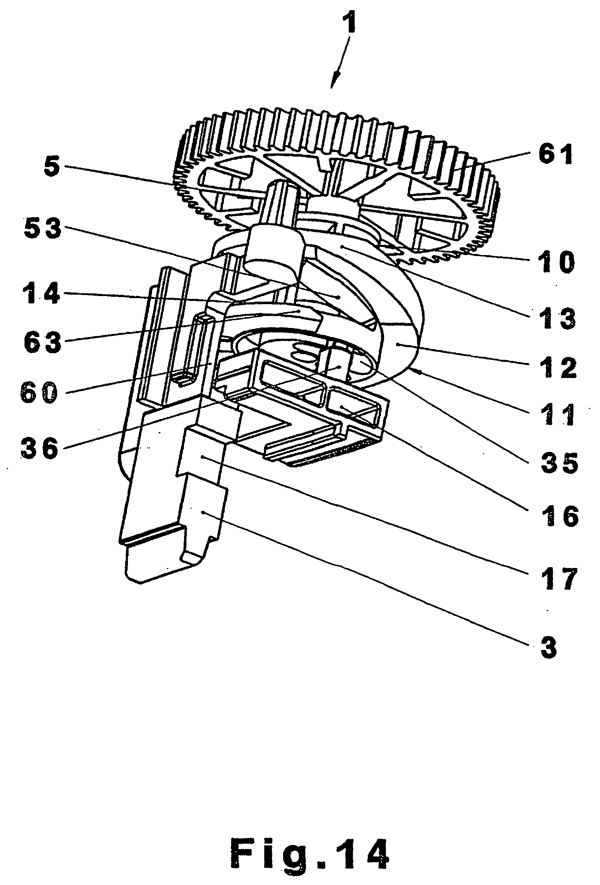

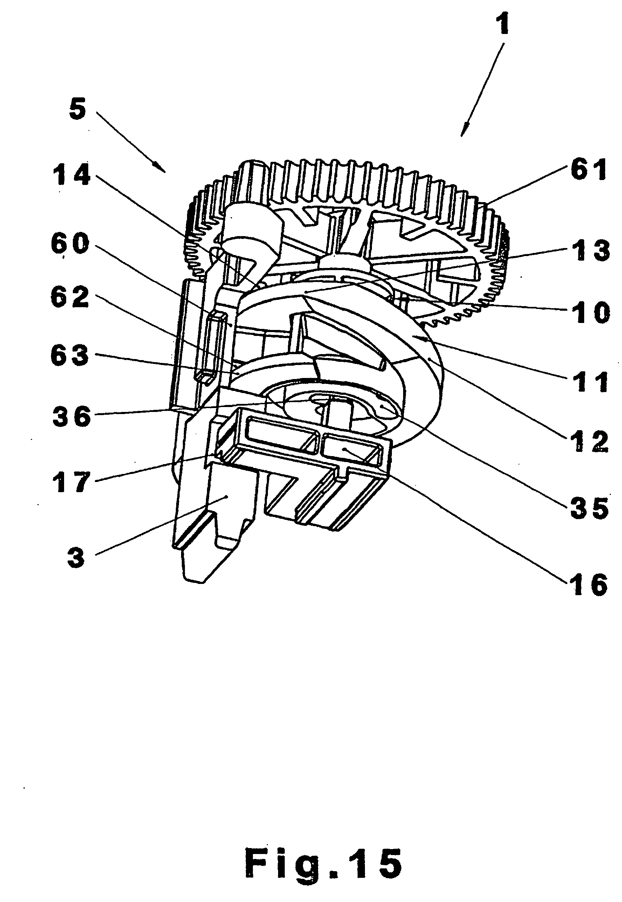

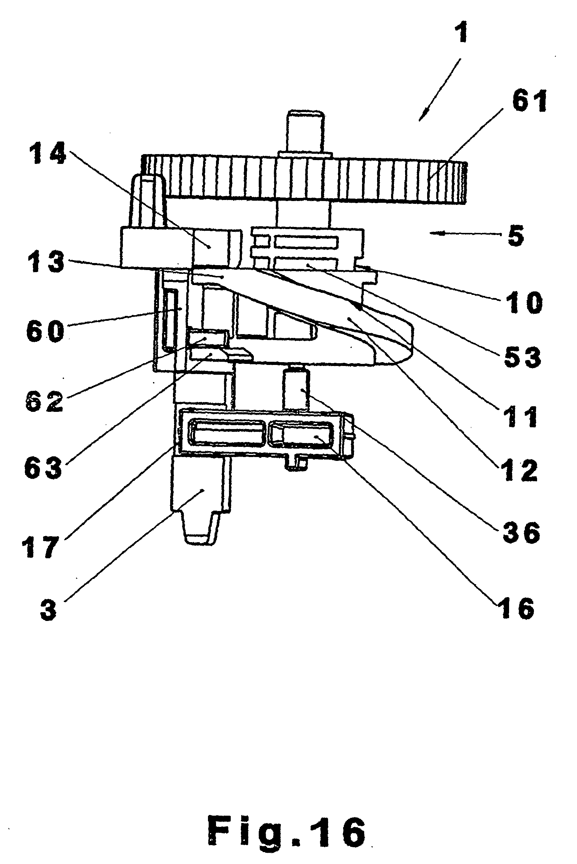

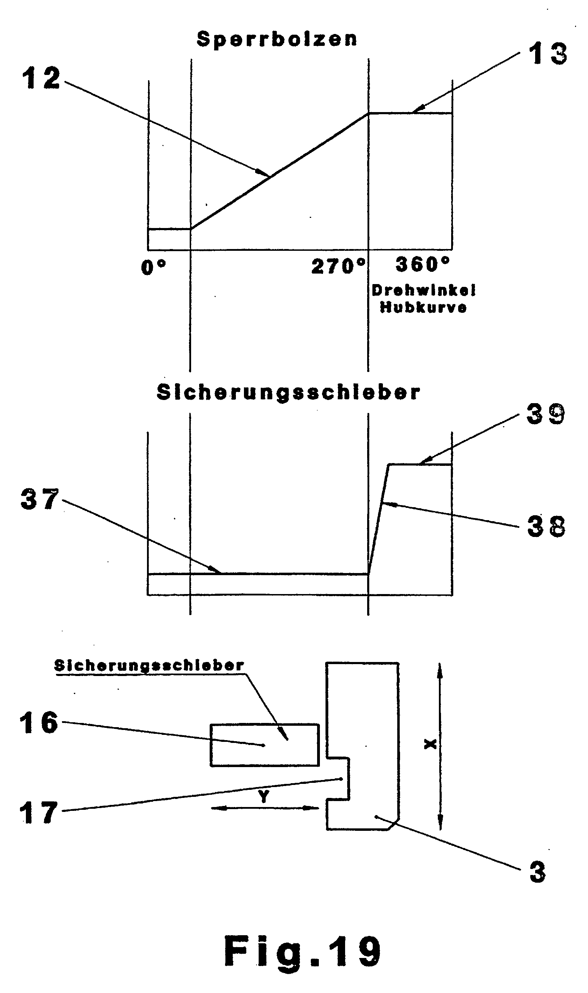

Durch die Ausgestaltung der Steuerkurve 35 wird bei Bewegung der Antriebswelle 10 aus der in Fig. 14 gezeigten ersten Position in Entriegelungsrichtung das Sicherungselement 16 in dem einen in etwa konstanten Radius besitzenden, ersten Abschnitt 37 der Steuerkurve 35 nicht bewegt, während der Sperrbolzen 3 hingegen durch den schraubenartigen Abschnitt 12 der Hubkurve 11 bewegt wird. Bei Erreichen des plateauartigen Abschnitts 13 in der Hubkurve 11 beginnt der in etwa radial verlaufende, zweite Abschnitt 38 der Steuerkurve 35. Hierbei wird nunmehr das Sicherungselement 16 in Zusammenwirkung mit dem Sperrbolzen 3 bewegt, indem das Sicherungselement 16 in die Nut 17 am Sperrbolzen 3 eingreift. In dem einen etwa konstanten Radius besitzenden, dritten Abschnitt 39 der Steuerkurve 35 wird wiederum das Sicherungselement 16 nicht mehr weiter bewegt. Ebenso wird aufgrund des plateauartigen Abschnitts 13 in der Hubkurve 11 auch der Sperrbolzen 3 nicht mehr bewegt, so daß der Sperrbolzen 3 in der in Fig. 15 und 16 gezeigten zweiten Position befindlich ist. Gleichzeitig hat dabei eine Zustandsänderung für den Sperrbolzen 3 in den Sicherungszustand stattgefunden. Dieser prinzipielle Bewegungsablauf ist auch näher in Fig. 19 verdeutlicht. Umgekehrt wird bei Bewegung der Antriebswelle 10 aus der zweiten Position in Verriegelungsrichtung das Sicherungselement 16 im dritten und ersten Abschnitt 39, 37 der Steuerkurve 35 nicht bewegt sowie im zweiten Abschnitt 38 außer Zusammenwirkung mit dem Sperrbolzen 3 bewegt. Dadurch erfolgt dann eine Zustandsänderung in den Entsicherungszustand für den Sperrbolzen 3.

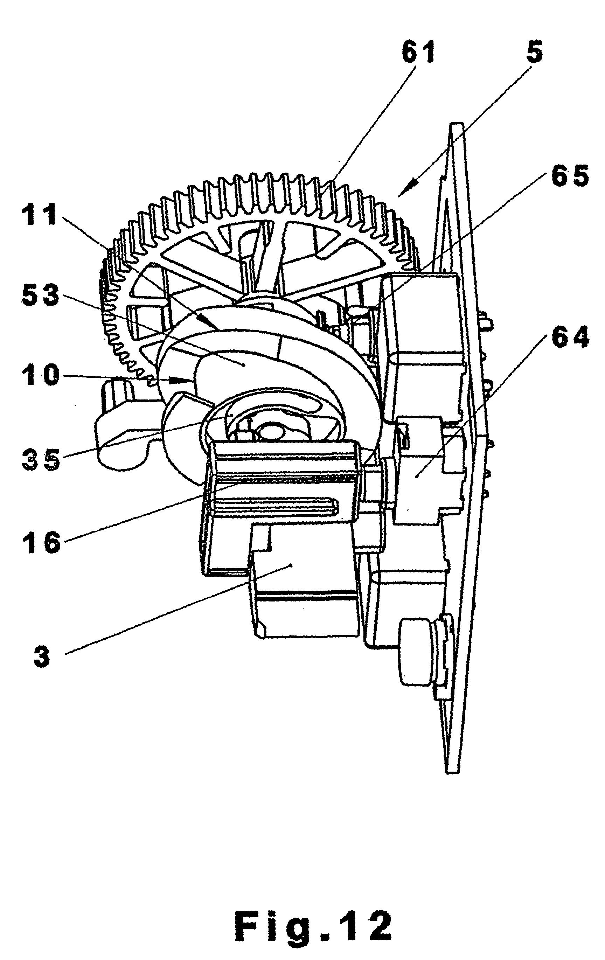

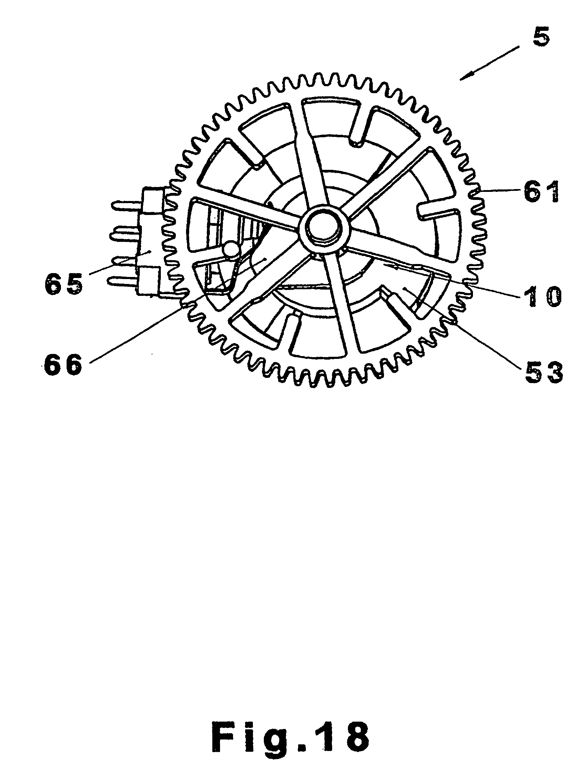

Wie ebenfalls der Fig. 17 zu entnehmen ist, ist die Steuerkurve 35 als Nut in der Grundfläche des in etwa zylinderförmigen Rotors 53 ausgestaltet. Das beispielsweise in Fig. 11 sichtbare Führungselement 36, das in diese Nut eingreift, ist anders als bei der ersten Ausführung im wesentlichen starr am Sicherungselement 16 angebracht. Wie näher in Fig. 12 gezeigt ist, betätigt das Sicherungselement 16 im Sicherungszustand ein Schaltelement 64, was zur Detektierung der Position des Sperrbolzens 3 dient. Folglich dient das Sicherungselement 16 gleichzeitig zur Sicherung sowie auch zur Positionserkennung des Sperrbolzens 3. Bevorzugterweise befindet sich eine Sollbruchstelle zwischen dem Führungselement 36 und dem Sicherungselement 16, so daß im Fehlerfall für die Verriegelungseinrichtung 1, beispielsweise der Sperrbolzen 3 wird nicht in die zweite Position gebracht und das Sicherungselement 16 kann nicht in die Nut 17 eingreifen, ein Abscheren des Führungselementes 36 bewirkt wird. Dadurch kommt es im Fehlerfall also nicht zur Betätigung des Schaltelementes 64, so daß der Fehlerfall bemerkt und dementsprechend reagiert werden kann. Bei dem Schaltelement 64 sowie weiteren in Fig. 18 gezeigten Schaltelementen 65 zur Detektierung der Position des Rotors 53 mittels entsprechender Nocken 66 am Rotor 53 kann es sich um Schnapp- und/oder Mikroschalter handeln.

Die Erfindung ist nicht auf die beschriebenen und dargestellten Ausführungsbeispiele beschränkt. Sie umfaßt vielmehr auch alle fachmännischen Weiterbildungen im Rahmen des Erfindungsgedankens. So kann eine derartige Verriegelungseinrichtung 1 nicht nur an der Lenkradsäule sondern auch an einem sonstigen funktionsrelevanten Betriebsaggregat des Kraftfahrzeugs Verwendung finden. Bei einem solchen Betriebsaggregat kann es sich beispielsweise um den Getriebeschalthebel, um den Wählhebel für ein Automatikgetriebe, um den Anlasser o. dgl. handeln.

### Bezugszeichen-Liste:

- 1:: Verriegelungseinrichtung
- 3:: Sperrbolzen
- 5:: Antrieb (für den Sperrbolzen)
- 6:: elektrischer Endschalter
- 7:: Elektromotor
- 8:: Abtriebswelle (des Elektromotors)
- 10:: Antriebswelle (für Sperrbolzen)
- 11:: Hubkurve
- 12:: schraubenartiger Abschnitt (der Hubkurve)
- 13:: plateauartiger Abschnitt (der Hubkurve)
- 14:: Zapfen (von Sperrbolzen)
- 16:: Sicherungselement
- 17:: Nut
- 32:: Schnecke
- 33:: Verzahnung
- 34:: Hohlraum
- 35:: Steuerkurve
- 36:: Führungselement
- 37:: erster Abschnitt (der Steuerkurve)
- 38:: zweiter Abschnitt (der Steuerkurve)
- 39:: dritter Abschnitt (der Steuerkurve)
- 40:: Steuernocken
- 41:: Außenrand (am Rotor)
- 42:: Innenrand (am Rotor)
- 43:: Durchgang (in zweitem Abschnitt)
- 44:: Gehäuse (von Verriegelungseinrichtung)
- 45:: Lagersitz (für Rotor)
- 46:: Durchbruch (im Lagersitz)
- 47:: Führung (für Sicherungselement)
- 48:: Schieber (für Sicherungselement)
- 49:: Rasthaken (an Schieber)
- 50:: Feder (im Schieber)
- 51:: Ausnehmung (am Schieber)
- 52:: Anschlag (am Schieber)
- 53:: Rotor
- 54:: Vorsprung (in Steuerkurve)
- 60:: Halteteil
- 61:: Stirnzahnrad
- 62:: (zweiter) Zapfen
- 63:: (weiterer) plateauartiger Abschnitt
- 64,65:: Schaltelement
- 66:: Nocken

## Patentansprüche

1. Verriegelungseinrichtung für ein Kraftfahrzeug mit einem zwischen einer ersten und einer zweiten Position bewegbaren Sperrbolzen (3) zur Verriegelung eines funktionsrelevanten Bauteils, wie der Lenkradsäule, des Getriebeschalthebels o. dgl., wobei der Sperrbolzen (3) in der ersten Position in blockierenden Eingriff mit dem Bauteil bringbar ist und in der zweiten Position außer Eingriff mit dem Bauteil steht, und mit einem insbesondere einen Elektromotor (7) enthaltenden Antrieb (5) für eine Antriebswelle (10), wobei der Sperrbolzen (3) mittels einer Hubkurve (11) an der Antriebswelle (10) bewegbar ist, und wobei der Antrieb (5) in Entriegelungsrichtung für die Bewegung des Sperrbolzens (3) in Richtung zur zweiten Position sowie in Verriegelungsrichtung für die Bewegung des Sperrbolzens (3) in Richtung zur ersten Position ansteuerbar ist, **dadurch gekennzeichnet, daß** ein Sicherungselement (16) derart in und außer Zusammenwirkung mit dem Sperrbolzen (3) bewegbar ist, daß der Sperrbolzen (3) in einen Sicherungszustand und einen Entsicherungszustand bringbar ist, wobei im Sicherungszustand der blockierende Eingriff des Sperrbolzens (3) in das Bauteil gesperrt sowie im Entsicherungszustand freigegeben ist, und daß das Sicherungselement (16) von der Antriebswelle (10) bewegt wird, derart daß der Sperrbolzen (3) in der zweiten Position im Sicherungszustand befindlich ist.

2. Verriegelungseinrichtung nach Anspruch 1, **dadurch gekennzeichnet, daß** die Antriebswelle (10) den Sperrbolzen (3) und das Sicherungselement (16) zwangsgeführt bewegt, wobei vorzugsweise der Sperrbolzen (3) bei Ansteuerung des Antriebs (5) aus der zweiten Position in Verriegelungsrichtung zunächst im Sicherungszustand bleibt, und wobei weiter vorzugsweise eine Zustandsänderung des Sperrbolzens (3) in den Entsicherungzustand nur dann erfolgt, wenn der Antrieb (5) anschließend wiederum in Entriegelungsrichtung angesteuert wird.

3. Verriegelungseinrichtung nach Anspruch 1 oder 2, **dadurch gekennzeichnet, daß** die Antriebswelle (10) in der Art eines Rotors (53) ausgebildet ist, wobei vorzugsweise der Antrieb (5) den Rotor (53) mittels eines Getriebes, das beispielsweise aus Stirnzahnrädern (61), einer auf eine am Außenumfang des Rotors (53) angebrachte Verzahnung (33) einwirkende Schnecke (32) o. dgl. besteht, dreht.

4. Verriegelungseinrichtung nach Anspruch 1, 2 oder 3, **dadurch gekennzeichnet, daß** in der Achse des Rotors (53) ein Hohlraum (34) befindlich ist, wobei im Hohlraum (34) der Sperrbolzen (3) derart angeordnet ist, daß der Sperrbolzen (3) an dem einen Ende des Rotors (53) übersteht, und daß vorzugsweise die Hubkurve (11) an dem anderen Ende und im Inneren des Rotors (53) angebracht ist.

5. Verriegelungseinrichtung nach Anspruch 1, 2 oder 3, **dadurch gekennzeichnet, daß** die Hubkurve (11) am Äußeren des Rotors (53), insbesondere an dessen Mantelfläche angebracht ist, und daß vorzugsweise ein Halteteil (60) des Sperrbolzens (3) seitlich am Äußeren des Rotors (53) derart angeordnet ist, daß das Halteteil (60) der Hubkurve (11) zugewandt ist.

6. Verriegelungseinrichtung nach einem der Ansprüche 1 bis 5, **dadurch gekennzeichnet, daß** die Hubkurve (11) einen schraubenartigen Abschnitt (12) aufweist, wobei ein Zapfen (14) des Sperrbolzens (3) und/oder dessen Halteteils (60) derart in die Hubkurve (11) eingreift, daß der Sperrbolzen (3) mittels des schraubenartigen Abschnitts (12) der Hubkurve (11) zwischen den beiden Positionen bewegt wird, daß vorzugsweise die Hubkurve (11) einen der zweiten Position zugeordneten, plateauartigen Abschnitt (13) besitzt, wobei der Eingriff des Zapfens (14) in den plateauartigen Abschnitt (13) ein Verbleiben des Sperrbolzens (3) in der zweiten Position trotz Bewegung der Antriebswelle (10) bewirkt, und daß weiter vorzugsweise ein zweiter Zapfen (62) des Sperrbolzens (3) und/oder dessen Halteteils (60) in einen weiteren plateauartigen Abschnitt (63) am Rotor (53) in der zweiten Position eingreift.

7. Verriegelungseinrichtung nach einem der Ansprüche 1 bis 6, **dadurch gekennzeichnet, daß** es sich bei dem Sicherungselement (16) um ein mechanisches Sicherungselement handelt, und daß eine zum Sicherungselement (16) korrespondierende Nut (17) am Sperrbolzen (3) befindlich ist, wobei das Sicherungselement (16) im Sicherungszustand in die Nut (17) eingreift sowie im Entsicherungszustand außer Eingriff mit der Nut (17) ist.

8. Verriegelungseinrichtung nach einem der Ansprüche 1 bis 7, **dadurch gekennzeichnet, daß** das Sicherungselement (16) mittels einer Steuerkurve (35) bewegbar ist, wozu insbesondere ein Führungselement (36) in die Steuerkurve (35) eingreift, und daß vorzugsweise die Steuerkurve (35) am Rotor (53) angebracht ist.

9. Verriegelungseinrichtung nach einem der Ansprüche 1 bis 8, **dadurch gekennzeichnet, daß** die Steuerkurve (35) an dem einen, dem überstehenden Sperrbolzen (3) zugewandten Ende und im Inneren des Rotors (53) angebracht ist, daß vorzugsweise die Steuerkurve (35) drei Abschnitte (37, 38, 39) aufweist, die derart ausgestaltet sind, daß bei Bewegung der Antriebswelle (10) aus der ersten Position in Entriegelungsrichtung das Sicherungselement (16) in dem ersten und zweiten Abschnitt (37, 38) nicht bewegt sowie im dritten Abschnitt (39) in Zusammenwirkung mit dem Sperrbolzen (3) bewegt wird, und daß bei Bewegung der Antriebswelle (10) aus der zweiten Position in Verriegelungsrichtung das Sicherungselement (16) im dritten und ersten Abschnitt (39, 37) nicht bewegt sowie im zweiten Abschnitt (38) lediglich bei Ansteuerung des Antriebs (5) in Entriegelungsrichtung außer Zusammenwirkung mit dem Sperrbolzen (3) bewegt wird, derart daß eine Zustandsänderung in den Sicherungszustand oder in den Entsicherungszustand für den Sperrbolzen (3) erfolgt.

10. Verriegelungseinrichtung nach einem der Ansprüche 1 bis 9, **dadurch gekennzeichnet, daß** das Führungselement (36) federbelastet in Verriegelungsrichtung umklappbar ausgestaltet ist, um beim Umklappen außer Eingriff und beim Rückklappen wieder in Eingriff mit der Steuerkurve (35) zu gelangen, daß die Steuerkurve (35) im zweiten Abschnitt (38) einen Steuernocken (40) aufweist, wobei das Führungselement (36) bei Bewegung der Antriebswelle (10) in Verriegelungsrichtung an der einen Seite des Steuernockens (40) zur Passage des Steuernockens (40) umklappt, und das rückgeklappte Führungselement (36) bei erneuter Bewegung der Antriebswelle (10) in Entriegelungsrichtung an der anderen Seite des Steuernockens (40) derart entlang geführt wird, daß das Sicherungselement (16) außer Zusammenwirkung mit dem Sperrbolzen (3) bewegt wird.

11. Verriegelungseinrichtung nach einem der Ansprüche 1 bis 10, **dadurch gekennzeichnet, daß** der Rotor (53) an dem einen, dem überstehenden Sperrbolzen (3) zugewandten Ende einen entlang des Umfangs verlaufenden Außenrand (41) und einen den Hohlraum (34) umgebenden Innenrand (42) aufweist, daß vorzugsweise der erste Abschnitt (37) der Steuerkurve (35) als eine konzentrisch, entlang des Außenrandes (41) des Rotors (53) verlaufende Nut ausgestaltet ist, die in etwa eine dem Führungselement (36) entsprechende Breite besitzt, daß weiter vorzugsweise der zweite Abschnitt (38) der Steuerkurve (35) als eine Nut mit einer vom Innenrand (42) zum Außenrand (41) reichenden Breite ausgestaltet ist, wobei der Steuernocken (40) in etwa in deren Mitte vom Innenrand (42) abgeht sowie zum Außenrand (41) weist und einen Durchgang (43) zum Außenrand (41) für das Führungselement (36) freiläßt, und daß noch weiter vorzugsweise der dritte Abschnitt (39) der Steuerkurve (35) als eine schräg vom Außenrand (41) zum Innenrand (42) verlaufende Nut ausgestaltet ist, die in etwa mit einer dem Führungselement (36) entsprechenden Breite ausläuft.

12. Verriegelungseinrichtung nach einem der Ansprüche 1 bis 8, **dadurch gekennzeichnet, daß** die Steuerkurve (35) an dem einen, dem Sperrbolzen (3) zugewandten Ende und an der einen Grundfläche des Rotors (53) angebracht ist, daß vorzugsweise die Steuerkurve (35) drei, insbesondere insgesamt in etwa schneckenförmige Abschnitte (37, 38, 39) aufweist, die dergestalt sind, daß bei Bewegung der Antriebswelle (10) aus der ersten Position in Entriegelungsrichtung das Sicherungselement (16) in dem ersten Abschnitt (37) nicht bewegt, im zweiten Abschnitt (38) das Sicherungselement (16) in Zusammenwirkung mit dem Sperrbolzen (3) bewegt wird sowie im dritten Abschnitt (39) wiederum nicht bewegt wird, und daß bei Bewegung der Antriebswelle (10) aus der zweiten Position in Verriegelungsrichtung das Sicherungselement (16) im dritten und ersten Abschnitt (39, 37) nicht bewegt sowie im zweiten Abschnitt (38) außer Zusammenwirkung mit dem Sperrbolzen (3) bewegt wird, derart daß eine Zustandsänderung in den Sicherungszustand oder in den Entsicherungszustand für den Sperrbolzen (3) erfolgt.

13. Verriegelungseinrichtung nach einem der Ansprüche 1 bis 12, **dadurch gekennzeichnet, daß** die Steuerkurve (35) als Nut in der Grundfläche des Rotors (53) ausgestaltet ist, und daß vorzugsweise das Führungselement (36) starr am Sicherungselement (16) derart angebracht ist, daß das Führungselement (36) in die Nut eingreift.

14. Verriegelungseinrichtung nach einem der Ansprüche 1 bis 13, **dadurch gekennzeichnet, daß** ein Gehäuse (44) zur Aufnahme des Antriebs (5), der Antriebswelle (10) u. dgl. vorgesehen ist, daß vorzugsweise im Gehäuse (44) ein Lagersitz (45) zur drehbaren Lagerung des Rotors (53) angeordnet ist, daß weiter vorzugsweise im Lagersitz (45) sich ein zum Äußeren des Gehäuses (44) reichender Durchbruch (46) für den Sperrbolzen (3) befindet, und daß noch weiter vorzugsweise eine in etwa quer zum Sperrbolzen (3) verlaufende Führung (47) für das bewegbare Sicherungselement (16) am Lagersitz (45) befindlich ist.

15. Verriegelungseinrichtung nach einem der Ansprüche 1 bis 14, **dadurch gekennzeichnet, daß** das Sicherungselement (16) als Schieber (48) ausgebildet ist, daß vorzugsweise der Schieber (48) mittels eines Rasthakens (49) in der als Schiebeführung ausgestalteten Führung (47) angeordnet ist, daß weiter vorzugsweise das in etwa bolzenartig abstehende Führungselement (36) über eine Feder (50) drehbar am Schieber (48) gelagert ist, wobei insbesondere das Führungselement (36) zur einen Seite gegen die Kraft der Feder (50) in eine Ausnehmung (51) am Schieber (48) auslenkbar ist und zur anderen Seite durch die Kraft der Feder (50) in Anlage an einem einseitigen Anschlag (52) am Schieber (48) steht, und daß noch weiter vorzugsweise im Sicherungszustand des Schiebers (48) die Ausnehmung (51) am Schieber (48) mit einer weiteren Ausnehmung in der Führung (47) korrespondiert, derart daß das ausgelenkte Führungselement (36) in den beiden Ausnehmungen aufgenommen ist.

16. Verriegelungseinrichtung nach einem der Ansprüche 1 bis 15, **dadurch gekennzeichnet, daß** das Sicherungselement (16) im Sicherungszustand ein Schaltelement (64), insbesondere einen Schnapp- und/oder Mikroschalter, zur Detektierung der Position des Sperrbolzens (3) betätigt, wobei vorzugsweise eine Sollbruchstelle zwischen dem Führungselement (36) und dem Sicherungselement (16) im Fehlerfall ein Abscheren des Führungselementes (36) unter Nichtbetätigung des Schaltelementes (64) bewirkt.

## Claims

1. Lock assembly for a motor vehicle comprising a bolt (3) which is movable between a first and a second position, for locking a functional component, such as the steering wheel column, the gear shift lever or the like, the bolt (3), in the first position, being adapted to engage in a locking manner with the component and, in the second position, being disengaged from the component, and comprising a drive (5) containing, in particular, an electric motor (7) for a drive shaft (10), the bolt (3) being movable by means of a lifting curve (11) on the drive shaft (10), and the drive (5) being triggerable in the unlocking direction for the movement of the bolt (3) in the direction of the second position and in the locking direction for the movement of the bolt (3) in the direction of the first position, **characterised in that** a securing element (16) may be moved into and out of cooperation with the bolt (3), **in that** the bolt (3) may be brought into a securing state and a release state, the locking engagement of the bolt (3) being blocked in the component in the securing state and being released in the release state, and **in that** the securing element (16) is moved by the drive shaft (10) in such a way that the bolt (3) is located in the second position in the securing state.

2. Lock assembly according to claim 1, **characterised in that** the drive shaft (10) moves the bolt (3) and the securing element (16) with forced guidance, the bolt (3) preferably initially remaining in the securing state when the drive (5) is triggered from the second position in the locking direction, and a change of state of the bolt (3) into the release state also preferably not taking place until the drive (5) is again triggered in the unlocking direction.

3. Lock assembly according to claim 1 or 2, **characterised in that** the drive shaft (10) is constructed in the manner of a rotor (53), the drive (5) preferably rotating the rotor (53) by means of a gear consisting, for example, of radial gear-wheels (61), a worm (32) acting on teeth (33) mounted on the outer periphery of the rotor (53) or the like.

4. Lock assembly according to claim 1, 2 or 3, **characterised in that** the shaft of the rotor (53) contains a cavity (34), the bolt (3) being arranged in the cavity (34) in such a way that the bolt (3) projects at one end of the rotor (53), and **in that** the lifting curve (11) is preferably mounted at the other end and inside the rotor (53).

5. Lock assembly according to claim 1, 2 or 3, **characterised in that** the lifting curve (11) is mounted on the exterior of the rotor (53), in particular on the external surface thereof, and **in that** a holding part (60) of the bolt (3) is preferably arranged laterally on the exterior of the rotor (53) in such a way that the holding part (60) faces the lifting curve (11).

6. Lock assembly according to any of claims 1 to 5, **characterised in that** the lifting curve (11) comprises a helical portion (12), a tenon (14) of the bolt (3) and/or the holding part (60) thereof engaging in the lifting curve (11) in such a way that the bolt (3) is moved by means of the helical portion (12) of the lifting curve (11) between the two positions, **in that** the lifting curve (11) preferably has a plate-like portion (13) associated with the second position, the engagement of the tenon (14) in the plate-like portion (13) causing the bolt (3) to remain in the second position despite the movement of the drive shaft (10), and **in that** a second tenon (62) of the bolt (3) and/or the holding part (60) thereof also preferably eng ages in a further plate-like portion (63) on the rotor (53) in the second position.

7. Lock assembly according to any of claims 1 to 6, **characterised in that** the securing element (16) is a mechanical securing element, and **in that** a groove (17) corresponding to the securing element (16) is located on the bolt (3), the securing element (16) engaging in the groove (17) in the securing state and being disengaged from the groove (17) in the release state.

8. Lock assembly according to any of claims 1 to 7, **characterised in that** the securing element (16) may be moved by means of a control curve (35), for which purpose, in particular, a guide element (36) engages in the control curve (35), and **in that** the control curve (35) is preferably mounted on the rotor (53).

9. Lock assembly according to any of claims 1 to 8, **characterised in that** the control curve (35) is mounted at the end facing the projecting bolt (3) and inside the rotor (53), **in that** the control curve (35) preferably comprises three portions (37, 38, 39) which are so constructed that, during movement of the drive shaft (10) from the first position in the unlocking direction, the securing element (16) is not moved in the first and second portion (37, 38) and is moved in the third position (39) in cooperation with the bolt (3), and **in that** during movement of the drive shaft (10) from the second position in the locking direction, the securing element (16) is not moved in the first and third portion (39, 37) and is moved in the second portion (38) only when the drive (5) is triggered in the unlocking direction out of cooperation with the bolt (3) in such a way that a change of state into the securing state or into the release state for the bolt (3) takes place.

10. Lock assembly according to any of claims 1 to 9, **characterised in that** the guide element (36) is springloaded and may be pivoted in the locking direction so that it disengages from the control curve (35) when pivoted and engages with the control curve (35) again when pivoted back, **in that** the control curve (35) comprises a control cam (40) in the second portion 38, the guide element (36) pivoting when the drive shaft (10) moves in the locking direction on one side of the control cam (40) for the passage of the control cam (40), and the pivoted-back guide element (36) being guided along the other side of the control cam (40) when the drive shaft (10) moves again in the unlocking direction, in such a way that the securing element (16) is moved out of cooperation with the bolt (3).

11. Lock assembly according to any of claims 1 to 10, **characterised in that** the rotor (53) comprises an outer rim (41) extending along the circumference and an inner rim (42) surrounding the cavity (34) at the end facing the projecting bolt (3), **in that** the first portion (37) of the control curve (35) is preferably configured as a groove which extends concentrically along the outer rim (41) of the rotor (53) and has a width substantially corresponding to the guide element (36), **in that** the second portion (38) of the control curve (35) is also preferably configured as a groove with a width extending from the inner rim (42) to the outer rim (41), the control cam (40) originating substantially in the centre thereof from the inner rim (42) and being directed to the outer rim (41) and leaving a passage (43) to the outer rim (41) for the guide element (36), and **in that** the third portion (39) of the control curve (35) is also preferably configured as a groove which extends obliquely from the outer rim (41) to the inner rim (42) and issues substantially with a width corresponding to the guide element (36).

12. Lock assembly according to any of claims 1 to 8, **characterised in that** the control curve (35) is mounted on the end facing the bolt (3) and on the base of the rotor (53), **in that** the control curve (35) preferably comprises three, in particular generally substantially helical portions (37, 38, 39) which are such that, when the drive shaft (10) is moved from the first position in the unlocking direction, the securing element (16) is not moved in the first portion (37), the securing element (16) is moved in the second portion (38) in cooperation with the bolt (3) and is not moved again in the third portion (39), and **in that**, when the drive shaft (10) is moved out of the second position in the locking direction, the securing element (16) is not moved in the first and third portion (37, 39) and is moved in the second portion (38) out of cooperation with the bolt (3) in such a way that a change of state into the securing state or into the released state for the bolt (3) takes place.

13. Lock assembly according to any of claims 1 to 12, **characterised in that** the control curve (35) is configured as a groove in the base of the rotor (53), and **in that** the guide element (36) is preferably mounted rigidly on the securing element (16) in such a way that the guide element (36) engages in the groove.

14. Lock assembly according to any of claims 1 to 13, **characterised in that** a housing (44) is provided to receive the drive (5), the drive shaft (10) and the like, **in that** a bearing seat (45) for rotatably mounting the rotor (53) is preferably arranged in the housing (44), **in that** an aperture (46) extending to the exterior of the housing (44), for the bolt (3), is also preferably located in the bearing seat (45), and **in that** a guide (47), extending substantially transversely to the bolt (3), for the movable securing element (16) is again also preferably also located in the bearing seat (45).

15. Lock assembly according to any of claims 1 to 14, **characterised in that** the securing element (16) is constructed as a slider (48), **in that** the slider (48) is preferably arranged by means of a hook (49) in the guide (47) configured as a guideway, **in that** the guide element (36) which projects substantially in the manner of a pin is also preferably mounted rotatably on the slider (48) via a spring (50), in particular the guide element (36) being deflectable into a recess (51) in the slider (48) against the force of the spring (50) on one side and contacting a one-sided stop (52) on the slider (48) owing to the force of the spring (50) on the other side, and **in that** the recess (51) in the slider (48) again also preferably corresponds to a further recess in the guide (47) in the securing state of the slider (48) in such a way that the deflected guide element (36) is received in the two recesses.

16. Lock assembly according to any of claims 1 to 15, **characterised in that** the securing element (16) in the securing state actuates a switch element (64), in particular a snap switch and/or microswitch, for detecting the position of the bolt (3), a set breaking point between the guide element (36) and the securing element (16) preferably causing the guide element (36) to shear off in the event of a fault, the switch element (64) not being actuated.

## Revendications

1. Dispositif de verrouillage pour véhicule à moteur, pourvu d'un pêne d'arrêt (3) pouvant être déplacé entre une première et une deuxième position pour verrouiller un composant fonctionnel, tel que la colonne de direction; le levier de changement de vitesse ou analogue, le pêne d'arrêt (3) pouvant être amené, dans la première position, en prise bloquante avec le composant, et se trouvant hors prise d'avec le composant dans la deuxième position, et d'un entraînement (5) comportant notamment un moteur électrique (7) pour un arbre d'entraînement (10), le pêne d'arrêt (3) pouvant être déplacé au moyen d'une came de levage (11) disposée sur l'arbre, d'entraînement (10) et l'entraînement (5) pouvant être commandé en direction de déverrouillage pour déplacer le pêne d'arrêt (3) en direction de la deuxième position ainsi qu'en direction de verrouillage pour déplacer le pêne d'arrêt (3) en direction de la première position,
**caractérisé en ce qu'**un élément de sécurité (16) peut être déplacé pour coopérer et ne pas coopérer avec le pêne d'arrêt (3), de telle sorte que le pêne d'arrêt (3) peut être amené dans un état avec sécurité et dans un état sans sécurité, à l'état avec sécurité, la prise bloquante du pêne d'arrêt (3) étant bloquée dans le composant et étant libérée à l'état sans sécurité, et **en ce que** l'élément de sécurité (16) est déplacé par l'arbre d'entraînement (10) de sorte que le pêne d'arrêt (3) se trouve dans la deuxième position à l'état avec sécurité.

2. Dispositif de verrouillage selon la revendication 1,
**caractérisé en ce que** l'arbre d'entraînement (10) déplace par guidage forcé le pêne d'arrêt (3) et l'élément de sécurité (16), le pêne d'arrêt (3) restant de préférence d'abord à l'état avec sécurité lors de la commande de l'entraînement (5) hors de la deuxième position en direction de verrouillage et ensuite, encore de préférence, un changement d'état du pêne d'arrêt (3) ne se produisant à l'état sans sécurité que lorsque l'entraînement (5) est ensuite de nouveau commandé dans la direction du déverrouillage.

3. Dispositif de verrouillage selon la revendication 1 ou 2,
**caractérisé en ce que** l'arbre d'entraînement (10) présente la forme d'un rotor (53), de préférence l'entraînement (5) faisant tourner le rotor (53) au moyen d'engrenages comportant par exemple des roues à denture frontale (61), une vis sans fin (32) agissant sur une denture (33) disposée à la périphérie du rotor (53) ou tout autre système équivalent.

4. Dispositif de verrouillage selon la revendication 1, 2 ou 3,
**caractérisé en ce qu'**est prévu un espace creux (34) dans l'axe du rotor (53), le pêne d'arrêt (3) étant disposé dans l'espace creux (34) de telle sorte que le pêne d'arrêt (3) fait saillie à une extrémité du rotor (53) et que de préférence la came de levage (11) est disposée à l'autre extrémité et à l'intérieur du rotor (53).

5. Dispositif de verrouillage selon la revendication 1, 2 ou 3,
**caractérisé en ce que** la came de levage (11) est disposée à l'extérieur du rotor (53), notamment au niveau de sa surface enveloppante, et **en ce que** de préférence une pièce de maintien (60) du pêne d'arrêt (3) est disposée latéralement à l'extérieur du rotor (53) de telle sorte que la pièce de maintien (60) est tournée vers la came de levage (11).

6. Dispositif de verrouillage selon l'une des revendications 1 à 5,
**caractérisé en ce que** la came de levage (11) présente un segment (12) de type vis, un tourillon (14) du pêne d'arrêt (3) et/ou de sa pièce de maintien (60) étant en prise avec la came de levage (11) de telle sorte que le pêne d'arrêt (3) est déplacé entre les deux positions au moyen du segment (12) de type vis de la came de levage (11), **en ce que** de préférence la came de levage (11) possède un segment (13) de type plateau associé à la deuxième position, la prise du tourillon (14) dans le segment (13) de type plateau maintenant le pêne d'arrêt (3) dans la deuxième position malgré le déplacement de l'arbre d'entraînement (10), et **en ce que** de manière encore préférée un deuxième tourillon (62) du pêne d'arrêt (3) et/ou de sa pièce de maintien (60) étant en prise avec un autre segment (63) de type plateau au niveau du rotor (53), dans la deuxième position.

7. Dispositif de verrouillage selon l'une des revendications 1 à 6,
**caractérisé en ce que** l'élément de sécurité (16) est un élément de sécurité mécanique et **en ce qu'**une rainure (17) correspondant à l'élément de sécurité (16) se trouve dans le pêne d'arrêt (3), l'élément de sécurité (16) étant en prise avec la rainure (17) à l'état avec sécurité et n'engrenant pas avec la rainure (17) à l'état sans sécurité.

8. Dispositif de verrouillage selon l'une des revendications 1 à 7,
**caractérisé en ce que** l'élément de sécurité (16) peut être déplacé au moyen d'une came de commande (35), ce pour quoi notamment un élément de guidage (36) est en prise avec la came de commande (35), et **en ce que** de préférence la came de commande (35) est disposée au niveau du rotor (53).

9. Dispositif de verrouillage selon l'une des revendications 1 à 8,
**caractérisé en ce que** la came de commande (35) est disposée au niveau de l'extrémité tournée vers le pêne d'arrêt (3) faisant saillie et à l'intérieur du rotor (53), **en ce que** de préférence la came de commande (35) présente trois segments (37, 38, 39) tels que, lorsque l'arbre d'entraînement (10) se déplace hors de la première position en direction de déverrouillage, l'élément de sécurité (16) ne se déplace pas dans le premier et dans le deuxième segment (37, 38) et se déplace dans le troisième segment (39) en coopération avec le pêne d'arrêt (3) et **en ce que** lorsque l'arbre d'entraînement (10) se déplace hors de la deuxième position en direction de verrouillage, l'élément de sécurité (16) ne se déplace pas dans le troisième et dans le premier segment (39, 37) et se déplace dans le deuxième segment (38), uniquement lors de la commande de l'entraînement (5) en direction de déverrouillage, sans coopération avec le pêne d'arrêt (3), de sorte qu'un changement d'état se produit à l'état avec sécurité ou à l'état sans sécurité pour le pêne d'arrêt (3).

10. Dispositif de verrouillage selon l'une des revendications 1 à 9,
**caractérisé en ce que** l'élément de guidage (36) est conçu de manière à être élastiquement rabattable en direction. de verrouillage pour être hors prise d'avec la came de commande (35) lors du rabattement et de nouveau en prise avec celle-ci lors du rabattement de retour, **en ce que** la came de commande (35) présente un ergot de commande (40) dans le deuxième segment (38), l'élément de guidage (36) se rabattant lorsque l'arbre d'entraînement (10) se déplace en direction de verrouillage sur un côté de l'ergot de commande (40) pour laisser passer l'ergot de commande (40) et **en ce que** l'élément de guidage (36) rabattu en retour est guidé par un nouveau mouvement de l'arbre d'entraînement (10) en direction de déverrouillage sur l'autre côté de l'ergot de commande (40) de sorte que l'élément de sécurité (16) est déplacé sans entrer en prise avec le pêne d'arrêt (3).

11. Dispositif de verrouillage selon l'une des revendications 1 à 10,
**caractérisé en ce que** le rotor (53) présente, à l'extrémité tournée vers le pêne d'arrêt (3) saillant, un bord extérieur périphérique (41) et un bord intérieur (42) entourant l'espace creux (34), **en ce que** le premier segment (37) de la came de commande (35) est de préférence configuré comme une rainure s'étendant de manière concentrique, le long du bord extérieur (41) du rotor (53), ladite rainure possédant une largeur correspondant approximativement à l'élément de guidage (36), **en ce que** de manière encore préférée le deuxième segment (38) de la came de commande (35) est configuré comme une rainure ayant une largeur s'étendant du bord intérieur (42) au bord extérieur (41), l'ergot de commande (40) se détachant du bord intérieur (42) approximativement au milieu de ladite rainure, pointant vers le bord extérieur (41) et laissant libre un passage (43) vers le bord extérieur (41) pour l'élément de guidage (36), et **en ce que** de manière encore préférée encore le troisième segment (39) de la came de commande (35) est configuré comme une rainure s'étendant obliquement du bord extérieur (41) à la bordure intérieure (42), ladite rainure ayant une largeur correspondant approximativement à l'élément de guidage (36).

12. Dispositif de verrouillage selon l'une des revendications 1 à 8,
**caractérisé en ce que** la came de commande (35) est disposée à l'extrémité tournée vers le pêne d'arrêt (3) et au niveau de la surface de base du rotor (53), **en ce que** de préférence la came de commande (35) présente trois segments (37, 38, 39) présentant notamment dans l'ensemble une forme de vis sans fin, lesdits segments étant configurés de telle sorte que, lorsque l'arbre d'entraînement (10) se déplace hors de la première position en direction de déverrouillage, l'élément de sécurité (16) n'est pas déplacé dans le premier segment (37), que dans le deuxième segment (38) l'élément de sécurité (16) est déplacé conjointement avec le pêne d'arrêt (3) et n'est en revanche pas déplacé dans le troisième segment (39), et que lorsque l'arbre d'entraînement (10) se déplace hors de la deuxième position en direction de verrouillage, l'élément de sécurité (16) n'est pas déplacé dans le troisième et le premier segment (39, 37) et qu'il est déplacé dans le deuxième segment (38) sans coopérer avec le pêne d'arrêt (3), de sorte qu'un changement d'état se produit à l'état avec sécurité ou à l'état sans sécurité pour le pêne d'arrêt (3).

13. Dispositif de verrouillage selon l'une des revendications 1 à 12,
**caractérisé en ce que** la came de commande (35) est configurée comme une rainure dans la surface de base du rotor (53) et **en ce que** de préférence l'élément de guidage (36) est disposé de manière rigide sur l'élément de sécurité (16), de sorte que l'élément de guidage (36) est en prise avec la rainure.

14. Dispositif de verrouillage selon l'une des revendications 1 à 13,
**caractérisé en ce qu'**un boîtier (44) est prévu pour recevoir l'entraînement (5), l'arbre d'entraînement (10) et d'autres éléments équivalents, **en ce qu'**un siège de roulement (45) est disposé de préférence dans le boîtier (44) pour loger de manière rotative le rotor (53), **en ce que** de manière encore préférée une ouverture (46) pour le pêne d'arrêt (3) se trouve dans le siège de roulement (45), lequel atteint l'extérieur du boîtier (44) et **en ce que** de manière davantage préférée encore, un guide (47) s'étendant approximativement perpendiculairement au pêne d'arrêt (3) est disposé au niveau du siège de roulement (45) pour l'élément de sécurité (16) mobile.

15. Dispositif de verrouillage selon l'une des revendications 1 à 14,
**caractérisé en ce que** l'élément de sécurité (16) est configuré comme un coulisseau (48), **en ce que** de préférence le coulisseau (48) est disposé dans le guide (47) configuré comme un guide coulissant au moyen d'un crochet d'arrêt (49), **en ce que** de manière davantage préférée l'élément de guidage (36) faisant saillie comme un goujon est disposé sur le coulisseau (48) de manière à pouvoir tourner par l'intermédiaire d'un ressort (50), l'élément de guidage (36) pouvant notamment être dévié d'un côté, contre l'action du ressort (50), dans un évidement (51) du coulisseau (48) et de l'autre côté par l'action du ressort (50), en appui contre une butée (52) unilatérale disposée sur le coulisseau (48), et **en ce que** de manière davantage préférée encore, l'évidement (51) du coulisseau (48) correspond, à l'état avec sécurité du coulisseau (48), avec un autre évidement dans le guide (47), de sorte que l'élément de guidage (36) dévié est reçu dans les deux évidements.

16. Dispositif de verrouillage selon l'une des revendications 1 à 15,
**caractérisé en ce que** l'élément de sécurité (16) actionne à l'état avec sécurité un élément de commutation (64), notamment un interrupteur sensible et/ou un micro interrupteur, pour détecter la position du pêne d'arrêt (3), de préférence un point de rupture de consigne entre l'élément de guidage (36) et l'élément de sécurité (16) entraînant, en cas d'erreur, un cisaillement de l'élément de guidage (36) lorsque l'élément de commutation (64) n'est pas actionné.
